(19) Europäisches Patentamt
European Patent Office
Office européen des brevets

(11) EP 4 070 224 B1

(12) **EUROPEAN PATENT SPECIFICATION**

(45) Date of publication and mention of the grant of the patent:
**04.06.2025 Bulletin 2025/23**

(21) Application number: **19816310.7**

(22) Date of filing: **05.12.2019**

(51) International Patent Classification (IPC):
***G06F 21/64*** *(2013.01)*

(52) Cooperative Patent Classification (CPC):
**G06F 21/64**

(86) International application number:
**PCT/EP2019/083823**

(87) International publication number:
**WO 2021/110270 (10.06.2021 Gazette 2021/23)**

(54) **SUPPORTING PROTECTED COLLECTION OF MEASUREMENT DATA IN A COMMUNICATION NETWORK**

UNTERSTÜTZTES SAMMELN VON MESSDATEN IN EINEM KOMMUNIKATIONSNETZWERK

PRISE EN CHARGE DE COLLECTE PROTÉGÉE DE DONNÉES DE MESURE DANS UN RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.10.2022 Bulletin 2022/41**

(73) Proprietor: **Telefonaktiebolaget LM Ericsson (publ)**
**164 83 Stockholm (SE)**

(72) Inventors:
- **TOGÅRD, Patricia**
  **192 73 SOLLENTUNA (SE)**
- **BERGSTRÖM, Daniel**
  **976 32 LULEÅ (SE)**
- **ARNGREN, Tommy**
  **954 42 SÖDRA SUNDERBY (SE)**
- **SMEETS, Bernard**
  **247 51 DALBY (SE)**

(74) Representative: **Zacco Sweden AB**
**P.O. Box 5581**
**Löjtnantsgatan 21**
**114 85 Stockholm (SE)**

(56) References cited:
**WO-A1-2012/075323**
**WO-A1-2019/215437**
**US-A1- 2017 206 238**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The proposed technology generally relates to various methods and systems for supporting protected collection of measurement data representative of usage of network capabilities within a communication network, as well as corresponding logical and/or physical entities or nodes, also referred to as managed entities, and corresponding network entities such as network nodes and/or cloud-based network devices, as well as a corresponding computer program and computer-program product.

### BACKGROUND

There is a general demand for technical solutions to provide secure, robust and/or protected collection of measurement data representative of usage of network capabilities in communication networks such as wired and/or wireless communication networks. Document WO2019/215437A1 and WO2012/075323A1 are relevant prior art for collection of usage data.

For example, manufacturers of mobile networks sell software and hardware to Mobile Network Operators (MNO) to be used in their infrastructure for their mobile network. The use of software and hardware is very often under governance of license agreements that not only allow the operators to use the hardware and software but also limit the use and/or describe how license fees are to be computed. Coupled to such agreements are mechanisms in the hardware and/or software that are involved in the process of enforcing the licenses and/or in the process of collecting and computing data that is used in the computation of fees that are paid. For example, the operator has to pay for the use of a network function in relation to delivered/used capacity. It is important for the manufacturer and the network operator that license enforcement and fee calculations are secure, correct and cannot be tampered with.

Today, the licensed features and capacities are controlled by license keys. License keys need to be deployed in the physical and/or virtual node for each individual capability to enable its function. 5G/New Radio (5G/NR) adds commercial flexibility by introducing usage control of some given capabilities via monitoring instead of controlling consumption via license keys. This flexibility may be essential to survive in the telecom equipment industry. Thus, there is a need for a method or solution to secure integrity of the collected usage data and/or to ensure that the usage data is not tampered with and reflects the actual usage. The usage data is normally collected from the customers network into the backend system of the network equipment provider for post processing and invoicing.

5G/NR adds commercial flexibility by introducing a price model based on dynamic control of capacity usage. Nodes are already prepared to report capacity usage. Selected capabilities are available to the operator to base the price model on. The capacity usage for the given capabilities is controlled via monitoring instead of controlling consumption via license keys. This price model will likely also apply to 4G/Long Term Evolution (4G/LTE) and other radio products in very near future.

Measurements are generally taken by trusted radio equipment, but specific measurements may be filtered out by network operators before reaching the backend system or data collection system of the network equipment provider. It is important, not to say crucial, that the measurement data representing usage of various network capabilities can be trusted in order to effectively enforce, e.g. licensing agreements. Unfortunately, digital signatures alone only protect against forgery; not filtering. In addition, modifications of measurement data from nodes in a network operated by a customer can be made in an attempt to unlawfully reduce the licensing fees and it is far from obvious have to provide protection from such fraudulent behavior.

### SUMMARY

It is a general object to provide improved and effective support for protected collection of measurement data representative of usage of network capabilities within a communication network.

It is an object to provide one or more methods for supporting protected collection of measurement data representative of usage of network capabilities within a communication network.

It is also an object to provide one or more systems configured to support protected collection of measurement data representative of usage of network capabilities within a communication network.

Another object is to provide a network entity comprising a system configured to support protected collection of measurement data.

Yet another object is to provide a managed entity comprising a system configured to support protected collection of measurement data.

It is a specific object to provide a controller system configured to support protected collection of measurement data.

It is also an object to provide a network entity comprising such a controller system.

Yet another specific object is to provide a validation system configured to support protected collection of measurement data.

A further object is to provide a network entity comprising such a validation system.

Still another object is to provide one or more computer programs for supporting, when executed, protected collection of measurement data.

It is also an object to provide a corresponding computer-program product.

These and other objects are met by embodiments of the proposed technology.

According to a first aspect, there is provided a method for supporting protected collection of measurement data, representative of usage of network capabilities within a communication network, related to at least two logical and/or physical entities or nodes, also referred to as managed entities, managed by a management system associated with the communication network. The method comprises:

- combining measurement data related to a set of at least two of the managed entities according to a controllable pattern, the pattern defining at least the order of managed entities in which the combining of measurement data is to be performed; and
- enabling the combined measurement data to be collected for validation of existence of the controllable pattern in the combined measurement data.

According to a second aspect, there is provided a method for supporting protected collection of measurement data, representative of usage of network capabilities within a communication network, related to at least two logical and/or physical entities or nodes, also referred to as managed entities, managed by a management system associated with the communication network. The method comprises:

- controlling combining of measurement data related to a set of at least two of the managed entities according to a controllable pattern, the controllable pattern defining at least the order of managed entities in which the combining of measurement data is to be performed; and
- enabling combined measurement data to be collected for validation of existence of the controllable pattern in the combined measurement data.

According to a third aspect, there is provided a method for supporting protected collection of measurement data, representative of usage of network capabilities within a communication network, related to at least two logical and/or physical entities or nodes, also referred to as managed entities, managed by a management system associated with the communication network. The method comprises:

- receiving combined measurement data related to a set of at least two of the managed entities, and
- checking existence of a controllable pattern in the combined measurement data to enable detection of missing or otherwise modified measurement data due to errors or fraudulent behavior, the controllable pattern defining at least the order of managed entities in which combining of measurement data is to be performed.

According to a fourth aspect, there is provided a system configured to support protected collection of measurement data, representative of usage of network capabilities within a communication network, related to at least two logical and/or physical entities or nodes, also referred to as managed entities, managed by a management system associated with the communication network. The system is configured to combine measurement data related to a set of at least two of the managed entities according to a controllable pattern, the controllable pattern defining at least the order of managed entities in which the combining of measurement data is to be performed. The system is also configured to enable the combined measurement data to be collected for validation of existence of the controllable pattern in the combined measurement data.

According to a fifth aspect, there is provided a network entity arranged between at least a subset of the managed entities and the management system, wherein the network entity comprises a system configured to support protected collection of measurement data according to the fourth aspect.

According to a sixth aspect, there is provided a managed entity comprising a system configured to support protected collection of measurement data according to the fourth aspect.

According to a seventh aspect, there is provided a controller system configured to support protected collection of measurement data, representative of usage of network capabilities within a communication network, related to at least two logical and/or physical entities or nodes, also referred to as managed entities, managed by a management system associated with the communication network. The system is configured to control combining of measurement data related to a set of at least two of the managed entities according to a controllable pattern, the controllable pattern defining at least the order of managed entities in which the combining of measurement data is to be performed. The system is also configured to enable combined measurement data to be collected for validation of existence of the controllable pattern in the combined measurement data.

According to an eighth aspect, there is provided a network entity arranged between at least a subset of the managed entities and the management system, wherein the network entity comprises a controller system configured to support protected collection of measurement data according to the seventh aspect.

According to a ninth aspect, there is provided a validation system configured to support protected collection of measurement data, representative of usage of network capabilities within a communication network, related to at least two logical and/or physical entities or nodes, also referred to as managed entities, managed by a management system associated with the communication network. The system is configured to receive combined measurement data related to a set of at least two of the managed entities. The system is also configured to check existence of a controllable pattern in the combined measurement data to enable detection of missing or otherwise modified measurement data due to errors or fraudulent behavior, the controllable pattern defining at least the order of managed entities in which combining of measurement data is to be performed.

According to a tenth aspect, there is provided a network entity comprising a validation system configured to support protected collection of measurement data according to the ninth aspect.

According to an eleventh aspect, there is provided a computer program for supporting, when executed, protected collection of measurement data, representative of usage of network capabilities within a communication network, related to at least two logical and/or physical entities or nodes, also referred to as managed entities, managed by a management system associated with the communication network. The computer program comprises instructions, which when executed by at least one processor, cause the system to:

- combine measurement data related to a set of at least two of the managed entities according to a controllable pattern, the controllable pattern defining at least the order of managed entities in which the combining of measurement data is to be performed; and
- enable the combined measurement data to be collected for validation of existence of the controllable pattern in the combined measurement data.

According to a twelfth aspect, there is provided a computer program for supporting, when executed, protected collection of measurement data, representative of usage of network capabilities within a communication network, related to at least two logical and/or physical entities or nodes, also referred to as managed entities, managed by a management system associated with the communication network. The computer program comprises instructions, which when executed by at least one processor, cause the system to:

- control combining of measurement data related to a set of at least two of the managed entities according to a controllable pattern, the controllable pattern defining at least the order of managed entities in which the combining of measurement data is to be performed; and
- enable combined measurement data to be collected for validation of existence of the controllable pattern in the combined measurement data.

According to a thirteenth aspect, there is provided a computer program for supporting, when executed, protected collection of measurement data, representative of usage of network capabilities within a communication network, related to at least two logical and/or physical entities or nodes, also referred to as managed entities, managed by a management system associated with the communication network. The computer program comprises instructions, which when executed by at least one processor, cause the system to:

- receive combined measurement data related to a set of at least two of the managed entities, and
- validate existence of a controllable pattern in the combined measurement data, the controllable pattern defining at least the order of managed entities in which combining of measurement data is to be performed.

According to a fourteenth aspect, there is provided a computer-program product comprising a non-transitory computer-readable medium having stored thereon a computer program according to any of the eleventh, twelfth or thirteenth aspect.

In this way, it is possible to effectively support protected collection of measurement data. For example, if the controllable pattern is not present in the combined measurement data this will be indicative of missing or otherwise modified measurement data due to errors or fraudulent behavior such as omission of important measurement data. Thus, validation of the existence or presence of the controllable pattern makes it possible to verify existence or presence of measurement data from *expected* measurements. Expressed slightly differently, it is possible to detect missing measurements by detecting that the controllable pattern is absent or missing in the combined measurement data. This means that it is possible to effectively and correctly enforce licensing agreements based on monitoring of usage of the network capabilities.

Other advantages will be appreciated when reading the detailed description.

## BRIEF DESCRIPTION OF THE DRAWINGS

The embodiments, together with further objects and advantages thereof, may best be understood by making reference to the following description taken together with the accompanying drawings, in which:

FIG. 1 is a schematic diagram illustrating an example of measurement of usage of network capabilities and conventional collection of corresponding measurement data from a set of managed entities within a communication network.

FIG. 2 is a schematic diagram illustrating an example of measurement of usage of network capabilities and protected collection of such measurement data from a set of managed entities within a communication network according to an embodiment.

FIG. 3A is a schematic flow diagram illustrating an example of a method for supporting protected collection of measurement data according to an embodiment.

FIG. 3B is a schematic flow diagram illustrating another example of a method for supporting protected collection of measurement data according to an embodiment.

FIG. 4 is a schematic flow diagram illustrating yet another example of a method for supporting protected collection of measurement data according to an embodiment.

FIG. 5 is a schematic diagram illustrating an example of a weaving pattern for weaving or combining measurement data from at least two different managed entities according to an embodiment.

FIG. 6 is a schematic diagram illustrating a specific example of weaving or combining of measurement data from different managed entities according to an embodiment.

FIG. 7 is a schematic flow diagram illustrating an example of another method for supporting protected collection of measurement data according to an embodiment.

FIG. 8 is a schematic flow diagram illustrating a specific example of a method for supporting protected collection of measurement data according to an embodiment.

FIG. 9 is a schematic flow diagram illustrating an example of yet another method for supporting protected collection of measurement data according to an embodiment.

FIG. 10 is a schematic flow diagram illustrating a specific example of a method for supporting protected collection of measurement data according to an embodiment.

FIG. 11 is a schematic flow diagram illustrating another specific example of a method for supporting protected collection of measurement data according to an embodiment.

FIG. 12 is a schematic diagram illustrating an example in which a combiner/weaver/controller combines measurement data from a selected set of managed entities according to a pattern/order of managed entities.

FIG. 13 is a schematic diagram illustrating an example in which a controller system controls a pattern/order of a selected set of managed entities and each managed entity (except the first in order) combines its own measurement data with measurement data from one or more previous managed entities.

FIG. 14 is a schematic signaling and action diagram illustrating an example of three different procedures and/or procedural phases of supporting protected collection of measurement data.

FIG. 15 is a schematic diagram illustrating an example of measurements having different periodicities according to an embodiment.

FIG. 16 is a schematic signaling and action diagram illustrating an example of actions by different entities involved in an overall controlled collection of measurement data according to an embodiment.

FIG. 17 is a schematic block diagram illustrating an example of a system and/or combiner according to an embodiment.

FIG. 18A is a schematic block diagram illustrating an example of a network entity comprising a system and/or combiner according to an embodiment.

FIG. 18B is a schematic block diagram illustrating an example of a managed entity comprising a system and/or combiner according to an embodiment.

FIG. 19A is a schematic block diagram illustrating an example of a controller system according to an embodiment.

FIG. 19B is a schematic block diagram illustrating an example of a network entity comprising a controller system configured to support protected collection of measurement data according to an embodiment.

FIG. 20A is a schematic block diagram illustrating an example of a validation system according to an embodiment.

FIG. 20B is a schematic block diagram illustrating an example of a network entity comprising a validation system configured to support protected collection of measurement data according to an embodiment.

FIG. 21 is a schematic diagram illustrating an example of a computer-implementation according to an embodiment.

## DETAILED DESCRIPTION

Throughout the drawings, the same reference designations are used for similar or corresponding elements.

Generally, all terms used herein are to be interpreted according to their ordinary meaning in the relevant technical field, unless a different meaning is clearly given and/or is implied from the context in which it is used. All references to a/an/the element, apparatus, component, means, step, and so forth are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

As used herein, the non-limiting term "network entity" may generally refer to any technical entity, component, device, system and/or or node located in connection with a network environment such as a wired and/or wireless communication network, including Internet components, servers and/or network nodes of wireless communication systems. The term network entity may also encompass cloud-based network devices.

As used herein, the non-limiting term "network node" may refer to any node or device located in connection with a communication network, including but not limited to devices in access networks, core networks and similar network structures. In particular, the term network node may refer to physical and/or virtual nodes within a network, as will be exemplified later on.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein, rather, these embodiments are provided by way of example to convey the scope of the subject matter to those skilled in the art.

As mentioned in the background, there are a number of issues and/or problems with the current technical solutions for secure, robust and/or protected collection of measurement data representative of usage of network capabilities in a communication network.

It may be useful to begin with a brief overview of how measurement data is obtained and collected in the prior art, with reference to FIG. 1.

FIG. 1 is a schematic diagram illustrating an example of measurement of usage of network capabilities and conventional collection of corresponding measurement data from a set of managed entities within a communication network.

The communication network 10 represents infrastructure and/or equipment for operating a wired and/or wireless network including hardware (HW) and/or software (SW) forming part of network functions such as physical Network Functions (pNF) and/or virtual Network Functions (vNF). These network functions may be represented by various logical and/or physical entities, also referred to as *managed entities (MEs),* that are managed and/or controlled by an associated management system 20. The management system 20 is normally operated by a network operator such as a Mobile Network Operator (MNO). The usage of the network capabilities, such as the mentioned network functions, is monitored by measurements, and the corresponding measurement data is transferred to a measurement data collection system 30, e.g. located in the backend system of the network equipment provider, via the management system 20 of the managed entities (MEs) within the communication network 10.

The MEs 15 and the management system 20 are normally customer controlled, i.e. under the control of the network operator licensing network functions from the network equipment provider, whereas the measurement data collection system 30 is normally part of the backend system of the network equipment provider.

The basic infrastructure is normally such that the management system 20 has a natural part in managing the measurements related to the considered set of MEs and transferring the corresponding measurement data to the measurement collection system. In other words, it is normally not feasible to simply bypass the management system 20 and let the measurement data collection system 30 of the network equipment provider directly collect the measurements.

As mentioned in the background, it is important that the measurement data representing usage of various network capabilities are reliable and can be trusted in order to effectively enforce, e.g. licensing agreements. There is a risk that specific measurements may be filtered out or otherwise modified by network operators before reaching the backend system or data collection system of the network equipment provider. There is general demand for a solution that offers improved protection against such fraudulent behavior and/or naturally occurring errors that may affect the measurement data in a way that is not intended.

The proposed technology provides an improved solution, as exemplified below with reference to exemplary, non-limiting embodiments.

FIG. 2 is a schematic diagram illustrating an example of measurement of usage of network capabilities and protected collection of such measurement data from a set of managed entities within a communication network according to an embodiment.

In the example of FIG. 2, the hardware- and/or software-based network functions such as pNF/vNF are represented directly as MEs 15, which may be arranged more or less independently of each other and/or in groups or clusters.

Further, and more importantly, the proposed technology provides additional functionality, for example, but not limited to, a combiner/weaver/controller 40 arranged between the MEs 15 and the management system 20 and a complementary validation system 35 located in the measurement data collection system 30.

By way of example, the combiner/weaver/controller 40 may be configured to combine or weave measurement data related to a set of at least two of the managed entities 15 according to a controllable pattern before sending the combined measurement data, also referred to as weaved measurement data, to the measurement data collection system 30 via the management system 20. The complementary validation system 35 may be configured to check or validate the existence of the controllable pattern in the combined measurement data.

The pattern defines at least the order of managed entities in which the combining of measurement data is to be performed. The pattern is normally controlled or controllable by the measurement data collection system 30 or similar system part associated with the backend system of the network provider, as indicated by the dashed line from the measurement data collection system 30 to the combiner/weaver/controller 40.

The combiner/weaver/controller 40 is configured to receive and/or take measurement data from a selected set of MEs 15 as input for combining or weaving the measurement data, and also enables the combined measurement data to be collected for validation of existence of the controllable pattern in the combined measurement data.

In a sense, the combiner/weaver/controller 40 can be seen as an intermediate or controlling proxy for enabling network customer-independent validation of measurement data. A proxy acts as an intermediary, which in this example is controlled by the data collection system 30 of the network equipment provider or manufacturer or corresponding entity, and not by the network customer such as a network operator that licenses the network equipment.

In this way, there are improved possibilities for detecting missing or otherwise modified measurement data, as will be explained below.

In the example of FIG. 2 the actual weaving or combining functionality is centralized to the combiner/weaver/-controller, but it may alternatively be distributed at least partly to one or more of the managed entities, as will be explained in more detail later on. In this case, the intermediate combiner/weaver/controller 40 may have a controlling function, whereby the combiner/weaver/controller controls the combining of measurement data. In this latter case, the combiner/weaver/-controller is sometimes simply referred to as a controller or controller system.

**In** overview, the proposed technology relates to several independent and/or complementary aspects, including at least:

- combining of measurement data, e.g. performed by i) the combiner/weaver/controller and/or ii) one or more managed entities,
- controlling the combining of measurement data;
- checking/validating existence of the controllable pattern in the combined measurement data.

FIG. 3A is a schematic flow diagram illustrating an example of a method for supporting protected collection of measurement data according to an embodiment.

According to a first aspect, there is provided a method for supporting protected collection of measurement data, representative of usage of network capabilities within a communication network, related to at least two logical and/or physical entities or nodes, also referred to as managed entities, managed by a management system associated with the communication network.

Basically, the method comprises:

S1: combining measurement data related to a set of at least two of the managed entities according to a controllable pattern, the pattern defining at least the order of managed entities in which the combining of measurement data is to be performed; and

S2: enabling the combined measurement data to be collected for validation of existence of the controllable pattern in the combined measurement data.

It is clearly important to be able to verify or validate with some certainty that measurement data from expected measurements are indeed present in the collected measurement data and/or to detect missing or otherwise modified measurement data due to errors or fraudulent behavior such as omission of important measurement data. In this context, it is important to understand that validation of the existence or presence of the controllable pattern makes it possible to verify existence or presence of measurement data from an *expected* set of measurements. In fact, the presence of the controllable pattern may in some sense translate more or less directly into the presence of a set of expected measurement data.

The other way around, validation of the absence of the controllable pattern makes it possible to detect missing or otherwise modified measurements. The absence of the controllable pattern may in some sense translate more or less directly into missing or otherwise modified measurement data.

This means that the proposed technology makes it possible to effectively and correctly enforce licensing agreements based on monitoring of usage of the network capabilities.

By way of example, the step S1 of combining measurement data may comprise the step S1-1 of cryptographically combining (e.g. by means of hashing) measurement data related to the set of at least two of the managed entities according to the controllable pattern, as indicated in FIG. 4.

Alternatively, the combining of measurement data may involve using linear functions and/or using properties of a cyclic group, as will be exemplified later on.

In a particular example, the step S2 of enabling the combined measurement data to be collected for validation may comprise the optional step S2-1 of preparing the combined measurement data for transfer towards a measurement collection system for enabling validation of existence of the controllable pattern in the combined measurement data, as schematically indicated in FIG. 4.

Further, the step S2 of enabling the combined measurement data to be collected for validation may comprise the optional step S2-2 of sending the combined measurement data to the measurement collection system via the management system, as schematically indicated in FIG. 4.

In another example, the method may further comprise the optional step S0 of obtaining information representative of the controllable pattern for determination of the controllable pattern, as schematically indicated in FIG. 3B. This may be any information that allows determination of the controllable pattern or information defining the pattern itself.

The controllable pattern may be referred to as a weaving pattern in the sense that the selected set of MEs is traversed in a certain order and measurement data from these MEs are combined and/or weaved together in this particular order.

As previously indicated, the combiner/weaver/controller 40 may perform (e.g. cryptographical) combining of measurement data from a set of considered MEs. This will also be exemplified in more detail later on with reference to FIG. 12.

For example, the method may be performed by a combiner/weaver/controller arranged as a controlling proxy between at least a subset of the managed entities 15 and the management system 20.

The management system 20 and the managed entities 15 may be network customer-controlled, whereas the weaver or combiner may be independently controlled by a measurement collection system 30 for enabling network customer-independent validation of measurement data.

In a particular example, the weaver or combiner may cryptographically combine hashed measurement data related to at least one managed entity of the set of at least two managed entities with hashed measurement data related to at least one other managed entity of the set of at least two managed entities.

More particularly, the weaver or combiner may cryptographically combine hashed measurement data by performing hashing of i) the hashed measurement data related to at least one managed entity of the set of at least two managed entities and ii) the hashed measurement data related to at least one other managed entity of the set of at least two managed entities.

As previously indicated, the combining of measurement data may alternatively be distributed to one or more MEs. This will also be exemplified in more detail later on with reference to FIG. 13.

For example, the method or at least part thereof may be performed by a managed entity 15 being part of the set of at least two of the managed entities from which measurement data is to be combined.

In a particular example, the managed entity 15 may cryptographically combine hashed measurement data related to at least one other managed entity of the set of at least two managed entities with hashed measurement data related to the managed entity.

More particularly, the managed entity 15 may cryptographically combine hashed measurement data by performing hashing of i) hashed measurement data related to at least one other managed entity of the set of at least two managed entities and ii) hashed measurement data related to the managed entity to produce a combined hash for validation.

By way of example, the managed entity 15 may send the combined hash to a controlling proxy, e.g. exemplified by controller 40, arranged between at least a subset of the managed entities 15 and the management system 20, enabling the controlling proxy 40 to send the combined hash to a measurement collection system 30 for validation of existence of the controllable pattern in the combined hash and/or send the combined hash to a next managed entity defined by the order of managed entities in which the combining of measurement data is to be performed for updating the combined hash. Optionally, the managed entity 15 may digitally sign the combined hash. The combined hash may in some examples be referred to as a running hash.

FIG. 5 is a schematic diagram illustrating an example of a weaving pattern for weaving or combining measurement data from at least two different managed entities according to an embodiment. In this particular example, the weaving pattern defines the order of managed entities in which the combining of measurement data is to be performed, e.g. starting with ME-2, followed by ME-1, and then ME-3 and finally ME-X.

One way to look at the weaving process is to regard the combiner/weaver/controller as the holder of the needle of a sewing machine that determines where (which ME) will receive the next stitch of the needle such that the thread goes from one ME to the next ME and so forth in a particular order, as schematically indicated in FIG. 5.

FIG. 6 is a schematic diagram illustrating a specific example of weaving or combining of measurement data from different managed entities according to an embodiment. In this non-limiting example, a so-called running hash procedure is used in which a continuously updateable running hash value is determined, for each considered ME in the pattern, by (e.g. cryptographically) combining measurement data of the considered ME with measurement data from one or more previous MEs. The running hash corresponds to the combined hash described above.

In this example, there are four MEs, ME-1 to ME4, referenced by reference numerals 15-1 to 15-4, and the weaving pattern defines a main order, here exemplified by ME1, ME2, ME4 and ME3.

To initialize the procedure, an initial value (init value) from the weaver is used as input to the first ME 15-1 in line since at the starting point there is no measurement data from one or more previous MEs available yet.

For example, for the first ME 15-1 in line the running hash may be determined according to:

*Running hash = hash (hash(init value) COMBINED WITH hash(data_measured_at_ME)).*

In other words, a hash of the initial value is combined with a hash of data measured at the ME to compute a combined value, which may then be hashed to produce the running hash.

For the second ME 15-2 in line, the current running hash obtained for the first ME 15-1 is used as input representing measurement data from one or more previous MEs (here from the first ME 15-1), and the current running hash is combined with a hash of data measured at the second ME 15-2 to determine an updated running hash. The new, updated running hash may be determined according to:

*Updated running hash = hash (current running hash COMBINED WITH hash(data_measured_at_ME)).*

Simplified, the current running hash may be represented as:

*Current running hash = hash (measurement_data_of_previous_ME(s))*

The updated running hash may therefore alternatively be represented as:

*Updated running hash = hash (hash (measurement_data_of_previous_ME(s)) COMBINED WITH hash(data_measured_at_ME)).*

Simplified, this may be written as:

*Running hash = hash (hash (measurement_data_of_previous_ME(s)) COMBINED WITH hash(data_measured_at_ME)).*

As an example, using simple concatenation denoted by "‖", the running hash may be expressed as:

*Running hash =*

*= hash (hash (measurement_data_of_previous_ME(s)) ‖ hash(data_measured_at_ME)).*

The running hash is then continuously updated in successive steps by traversing from one ME to the next ME according to the particular order (here exemplified by the order ME1, ME2, ME4, ME 3) given by the weaving pattern until a final running hash value has been determined. It should be understood that the weaver may and will normally be involved in relaying the running hash from one ME to the next ME, e.g. in a request-response procedure as will be exemplified later on.

It can also be seen that it is optionally possible to provide the running hash to more than one ME, as indicated by the dashed line from ME2 to ME3.

The running hash may be a representation of cryptographically combined measurement data that can be collected for validation of existence of the controllable pattern in the cryptographically combined measurement data. Alternatively, intermediate running hash values may be collected for validation.

In order for proper validation, the previously mentioned validation system, e.g. located at the backend system or data collection system 30 of the network equipment provider, need to collect the corresponding measurement data and have knowledge of the weaving pattern to be able to independently compute a running hash value for the considered set of MEs and compare this computed running hash value with the running hash value received from the combiner/weaver/-controller 40.

Optionally, the controllable pattern may further define, for at least one managed entity of the set of at least two of the managed entities, an order of measurements of the at least one managed entity in which the combining of corresponding measurement data is to be performed. With reference once again to FIG. 6, this may be exemplified by the order in which measurement data for a specific ME should be combined, such as the following internal orders for ME1 to ME4:

| | |
|---|---|
| ME1: | M3, M1, M2 |
| ME2: | M2, M3, M1 |
| ME3: | M1, M2, M3 |
| ME4: | M3, M2, M1 |

By way of example, the hash of data measured at a particular ME such as ME1 may be determined as:

*hash(data_measured_at_ME) = hash (M3 ‖ hash (M1 ‖ M2)).*

An alternative approach for combining measurement data according to a controllable pattern involves using a linear function like ax+by mod n where n is a large, say 256 bit prime and a and b are non-zero numbers relative prime to n, and x and y are the bit representations of the data to be combined. Another alternative is to use properties of any cyclic group (in mathematical sense) where a generator g of the group is selected and then g^(ax+by) is computed, where again a and b are integer numbers and x and y represent the bit (number) representation of the data to be combined.

FIG. 7 is a schematic flow diagram illustrating an example of another method for supporting protected collection of measurement data according to an embodiment.

According to a further aspect, there is provided a method for supporting protected collection of measurement data, representative of usage of network capabilities within a communication network, related to at least two logical and/or physical entities or nodes, also referred to as managed entities, managed by a management system associated with the communication network.

Basically, the method comprises:

S11: controlling combining of measurement data related to a set of at least two of the managed entities according to a controllable pattern, the controllable pattern defining at least the order of managed entities in which the combining of measurement data is to be performed; and

S12: enabling combined measurement data to be collected for validation of existence of the controllable pattern in the combined measurement data.

FIG. 8 is a schematic flow diagram illustrating a specific example of a method for supporting protected collection of measurement data according to an embodiment.

By way of example, the step S11 of controlling combining of measurement data may comprise the step S11-1 of sending a request to a managed entity being part of the set of at least two of the managed entities from which measurement data is to be combined, the request including hashed measurement data related to at least one other managed entity, for requesting the managed entity to combine the included hashed measurement data with hashed measurement data related to the managed entity to produce a combined hash.

Further, the step S11 of controlling combining of measurement data may comprise sending S11-2 the combined hash to a next managed entity defined by the order of managed entities in which the combining of measurement data is to be performed for updating the combined hash.

In a particular example, the step S12 of enabling combined measurement data to be collected for validation comprises the step S12-1 of receiving the produced combined hash and the step S12-2 of preparing the combined hash for transfer towards a measurement collection system for enabling validation of existence of the controllable pattern in the combined hash. The combined hash may for example correspond to a final or intermediate running hash.

These aspects will also be exemplified later on with reference to FIG. 13.

As an example, the method may be performed by a controlling proxy, e.g. exemplified by combiner/weaver/controller 40, arranged between at least a subset of the managed entities and the management system. However, in this case, the combiner/weaver/controller acts more like a controller, since the combining and/or weaving is distributed to the MEs.

As mentioned, the management system 20 and the managed entities 15 may be network customer-controlled, whereas the controlling proxy 40 is independently controlled by a measurement collection system 30 for enabling network customer-independent validation of measurement data.

By way of example, the controlling step S11 may be based on controlling cryptographical combining of measurement data related to a set of at least two of the managed entities according to the controllable pattern. Accordingly, the enabling step S12 may be based on enabling cryptographically combined measurement data to be collected for validation of existence of the controllable pattern in the cryptographically combined measurement data.

For example, the validation of existence of the controllable pattern in the combined measurement data may be performed or enabled to verify existence of measurement data from expected measurements of usage of network capabilities.

FIG. 9 is a schematic flow diagram illustrating an example of yet another method for supporting protected collection of measurement data according to an embodiment.

According to a further aspect, there is provided a method for supporting protected collection of measurement data, representative of usage of network capabilities within a communication network, related to at least two logical and/or physical entities or nodes, also referred to as managed entities, managed by a management system associated with the communication network.

Basically, the method comprises:

S21: receiving combined measurement data related to a set of at least two of the managed entities, and

S22: checking existence of a controllable pattern in the combined measurement data to enable detection of missing or otherwise modified measurement data due to errors or fraudulent behavior, the controllable pattern defining at least the order of managed entities in which combining of measurement data is to be performed.

FIG. 10 is a schematic flow diagram illustrating a specific example of a method for supporting protected collection of measurement data according to an embodiment.

In this example, the method further comprises controlling S20; S23 the controllable pattern, and sending information representative of the controllable pattern to a combiner/weaver/controller 40 arranged as a controlling proxy between at least a subset of the managed entities 15 and the management system 20 to enable the weaver or combiner to determine the controllable pattern and assist or participate in combining measurement data related to the set of at least two of the managed entities.

For example, the controllable pattern may be a randomly generated pattern defining the order of managed entities in which the combining of measurement data is to be performed.

FIG. 11 is a schematic flow diagram illustrating another specific example of a method for supporting protected collection of measurement data according to an embodiment.

In this particular example, the step S22 of checking existence of the controllable pattern in the combined measurement data may be performed by a validation system 35, which also receives corresponding measurement data related to the set of at least two of the managed entities, and comprises the step S22-1 of performing a comparison based on i) the received combined measurement data and ii) the corresponding measurement data, which is combined locally by the validation system 35.

By way of example, the method may be performed by a validation system 35 associated with a system 30 for collection of the measurement data from the managed entities 15.

In a particular example, the receiving step S21 may be based on receiving cryptographically combined measurement data related to a set of at least two of the managed entities, and the checking step S22 may be based on checking existence of a controllable pattern in the cryptographically combined measurement data.

There are some generally applicable optional features that are valid for all the methods described herein:
For example, as previously mentioned, the controllable pattern may further define, for at least one managed entity of the set of at least two of the managed entities, an order of measurements of the at least one managed entity in which the combining of corresponding measurement data is to be performed.

As should be understood, the set of at least two of the managed entities may be a selected subset of the managed entities.

By way of example, the set of at least two of the managed entities may be randomly selected.

As an example, the controllable pattern may be dynamically updated from time to time to provide improved security, in case the pattern should be compromised.

In a particular example, the managed entities 15 include virtual network function (vNF) nodes and/or physical network function (pNF) nodes, and the measurement data may be representative of usage of hardware-based and/or software-based network functions.

FIG. 12 is a schematic diagram illustrating an example in which a combiner/weaver/controller combines measurement data from a selected set of managed entities according to a pattern/order of managed entities. In this example, there may be a more or less continuous flow of measurement data from the MEs 15 towards the management system 20, which measurement data is intercepted by an intermediate combiner/weaver/controller 40 acting as a controlling and/or protecting proxy.

The combiner/weaver/controller 40 may be configured to (e.g. cryptographically) combine measurement data related to a set of at least two of the MEs 15 according to a controllable pattern. As mentioned, the pattern defines at least the order of managed entities in which the combining of measurement data is to be performed. The combiner/weaver/-controller 40 may receive information (such as a seed) representative of the pattern from a pattern generator associated with a validation system 35, which is normally located in connection with the measurement data collection system 30. The combiner/weaver/controller 40 may then use this information to determine the pattern and apply the pattern for combining measurement data in a data combining unit 42.

For example, combiner/weaver/controller 40 may be configured to cryptographically combine measurement data by using hashing to produce a combined hash, or so-called running hash.

The combiner/weaver/controller 40 may further be configured to enable the (cryptographically) combined measurement data to be collected for validation of existence of the controllable pattern in the (cryptographically) combined measurement data. For example, the combiner/weaver/controller 40 may send the (cryptographically) combined measurement data (e.g. as a hash) together with the corresponding measurement data to the management system 20, which forwards the information to the measurement data collection system 30 for validation of the hash by the validation system 35.

FIG. 13 is a schematic diagram illustrating an example in which a controller system controls a pattern/order of a selected set of managed entities and each managed entity (except the first in order) combines its own measurement data with measurement data from one or more previous managed entities. In this particular example, the combiner/weaver/-controller 40 is acting more like a controller or controller system and is henceforth referred to and denoted as such.

In this example, the controller system 40 may be configured to control the combining of measurement data related to a set of at least two of the MEs 15 according to a controllable pattern. The controllable pattern defines at least the order of managed entities in which the combining of measurement data is to be performed.

The controller system 40 may receive information (such as a seed) representative of the pattern from a pattern generator associated with a validation system 35, which is normally located in connection with the measurement data collection system 30. The controller system 40 may then use this information to determine the pattern and apply the pattern for controlling the combining of measurement data.

For example, the controller system 40 may be configured to send a request (REQ) to an ME 15 being part of the set of at least two of the MEs from which measurement data is to be (e.g. cryptographically) combined, the request including hashed measurement data related to at least one other managed entity, for requesting the ME 15 to (e.g. cryptographically) combine the included hashed measurement data with hashed measurement data related to the managed entity to produce a combined hash. Obviously, this does not apply to the first ME in the order, which instead of receiving hashed measurement data related to at least one other managed entity gets an initial value from the controller system 40.

In this example, each ME 15 comprises a hash module configured to perform the hashing. Each ME is also configured to send the determined combined hash together with the corresponding measurement data of the ME to the control system 40 in a response.

The controller system 40 is thus configured to receive the determined combined hash, and either send the combined hash in a request (REQ) to a next ME 15, defined by the given order of MEs, for updating the combined hash or prepare the combined hash for transfer together with the corresponding measurement data towards the measurement collection system 30 (via the management system 20) for enabling validation of existence of the controllable pattern in the combined hash by the validation system 35.

In this example, it may be beneficial to arrange the weaving by using the fact that data is normally collected on request from the MEs. In the request, it may thus be possible to also send data that is computed from combining (weaving) previously collected measurement data. For example, instead of computing a hash of the ME's own measured data and optionally sign the hash, it would be possible to compute a more complex hash involving a hash of measurement data of one or more previous MEs in the given order of MEs defined by the pattern as well as a hash of the ME's own measured data. For example, the hash may be a hash of a concatenation of i) the hash of measurement data of one or more previous MEs and ii) the hash of the ME's own measured data, as defined below:

$$H = hash\ (hash\ (measurement_data_of_previous_ME(s))\ \|\ hash(data_measured_at_ME)).$$

The resulting hash may optionally be signed (e.g. using RSA encryption). We call H the running hash, and we call the signature of H a running signature.

The manner how measurement data is processed for a given ME may optionally also be determined by the weaving pattern. For example, considering three internal measurements of a given ME, denoted M1, M2 and M3 it would, for example, be possible to determine the hash of the ME's own measured data as:

$$hash\ (data_measured\ at\ ME) = hash\ (M1\ \|\ hash\ (M2\ \|\ M3);$$

*or*

$$hash\ (data_measured\ at\ ME) = hash\ (M2\ \|\ hash\ (M1\ \|\ M3).$$

As previous data, it is also possible to have the previous running hash or a hash that combines running hashes of two or more MEs.

In the following, *non-limiting examples* will be given to provide a better understanding of certain aspects of the proposed technology.

In a sense, the proposed technology provides a weaver function and corresponding procedures (central or distributed) that organizes measurements according to a predefined pattern. The pattern may be controlled by the end receiver of the measurement data, and the presence of the pattern in combined or weaved measurement data guards against full-stream forgery.

As mentioned, reliability on the collected usage data relative to the actual usage is crucial, and hence, there is a need for a solution to secure integrity of the collected usage data to ensure that it is not tampered with and reflects the actual usage. The usage data is normally collected from the customer's network into a data collection system associated with the network equipment provider for aggregation according to a price model agreed with customer, storage, post processing and may be finalized in automated invoicing.

The measurement data related to a set of at least two MEs may be combined according to a pattern that the combiner/weaver/controller follows and/or determines. For example, combining means that a hash and optionally also signature of a series of measurements at an ME is hashed (optionally signed) together with a hash (also optionally signed) from another ME to produce a combined hash. The combined hash may be referred to as a running hash (and in case of signatures, a running signature). This process is here referred to as weaving. Effectively the weaving creates a chain of hashes and optionally signatures, where a running hash or signature effectively fingerprints the measurements of the considered set of MEs and where the value of the running hash also depends on the order in which the MEs are asked to perform the weaving.

By way of example, reference can be made to FIG. 6. It should be noted that as shown by the dotted arrow, a running hash could be used as input to more than one ME and correspondingly an ME may receive running hashes from several MEs.

In a particular example, when using hashing, the combiner/weaver/controller may be regarded as a procedure that controls the order and way measurements and running hashes are processed into forming a new running hash. In a sense, each measurement connects to nearby measurements in the pattern, and missing measurements can easily be detected. This protects against filtering of measurements. Optionally, each measurement may include a checksum to protect against measurement modifications.

For example, the proposed technology gives better protection against charging information/measurements being filtered out and/or modified compared to existing methods and also may have a built-in mechanism to provide a tradeoff between computation efforts for the protection and the amount of processing spent which makes it possible to reduce efforts on less important features and focus efforts on high value features.

By having measurements combined (weaved) using a controllable and/or varying pattern by a combiner/weaver/controller that gets instructions dynamically from a data collection system it is harder to make modifications so that the changes would not be detected by the data collection system. By way of example, the weaving pattern generator state may be maintained only in RAM (and enclave technology is used it is not even accessible). Hence the network operator leasing and/or using network equipment has to do much more reverse engineering to be able to keep pace with the weaving process; maybe even infeasible for the network operator. Since the MEs may optionally also sign the running hash it becomes very hard to fraudulently redo measurements in order to present another view of the measurements; i.e. it is very hard not to say impossible for the network operator to rewrite the past to the advantage of the network operator.

As a side note, combining transactions in general may be known from other technical contexts, such as the Tangle Distributed Ledger Technology (DLT) as described in references [1, 2] where a number of transactions from randomly selected nodes are combined. However, the Tangle system attempts to optimize the combining only to ensure that a) single transactions are not left unsigned for a long time, and b) big branches of transactions are not separated from the so-called main Tangle.

On the contrary, the proposed technology organizes measurements in a very particular technical application according to a pre-determined pattern and uses the inherent structure of the pattern to detect missing measurements in the system.

In this regard, it is important that the considered set of entities generating measurements is known. It may also be useful that measurements can be collected periodically, which makes the pattern in the weave repeatable.

Neither of these assumptions can be made for Tangle or other related DLT technologies.

FIG. 14 is a schematic signaling and action diagram illustrating an example of three different procedures and/or procedural phases of supporting protected collection of measurement data.

In this particular example, at least three different aspects are illustrated:

A. Continuous flow of data from MEs 15. Combiner/weaver 40 may add/apply pattern related to said MEs to provide (e.g. cryptographically) combined (weaved) measurement data, which may be transferred to the collection system 30 via the management system 20. Collection system 30 checks the pattern, optionally interacting with an associated database where relevant data may be stored.

B. Initiation of weaver function. Collection system 30 defines, stores pattern and sets pattern for a certain set of MEs 15. Combiner/weaver may add/apply pattern for said set of MEs 15.

C. Monitoring of data from MEs 15. Collection system 30 receives (via management system 20) measurement data, related to certain MEs, that has been (e.g. cryptographically) combined (weaved) with a certain pattern. Collection system 30 matches pattern embedded in the (e.g. cryptographically) combined measurement data with the stored pattern.

By way of example, the weaver pattern may be calculated by a program executed in the collection system 30 and may use e.g. seed input to generate patterns associated to certain MEs or certain sets of MEs. One alternative is that only the seed is stored in the database and can be used both for generating a pattern as well as for verification. Another alternative is e.g. to store the program and the seed for each ME or each set of MEs.

Since it may be too time consuming to combine or weave measurement data from all measurements and/or MEs, it is possible to combine measurement data from only a limited subset of the MEs and/or a limited subset of the measurement data from each of the considered MEs.

Assuming, for example, that at the j-th combining instance, the combiner/weaver and/or controller has already collected data from let's say K MEs and that we thus have an ordered set of K running hashes and/or corresponding running signatures associated with these K data collections. The combiner/weaver/controller may select at this particular instance j a set (or possibly only a subset) of these running hashes in a different order. The order is determined by a pseudo randomizer using a state, e.g. denoted by Sj, at instance j. For each instance that the randomizer is called for a weaving, the state is updated, i.e. Sj is updated to become $S_{j+1}$. The random orderings will create different weaving patterns. Examples of pseudo randomizers include Fisher-Yates shuffle or D Knuth's Algorithm P(Shuffle).

In order to make it harder to have a full history of the weaving patterns, the state of the weaving algorithm may be updated by the management system, either by pushing new state values down to the combiner/weaver/controller or by having inputs to the combiner/weaver/controller that change the state in a non-predictable way. This will now force a dishonest network operator to disassemble the combiner/weaver/controller and keep information of the state changes. To protect the combiner/weaver/controller from getting state change commands from an unauthorized source, the state change commands and data are preferably signed and the combiner/weaver/controller is configured to verify the signature.

Verification of the weaving pattern may be performed by a validation system or verifier that is configured with the algorithm that drives the state changes and the randomizer. The collected data is processed in a similar way as the weaver proceeded but with the entity replaced by an entity-verifier that checks the running hashes or the corresponding running signatures.

It is thus possible to have some form of randomized sampling by means of the randomization of the weaving process, and/or to handle state management related to a so-called global state of the combiner/weaver/controller that controls the weaving pattern.

If a fraudster wants to omit or surpass measurements this will be detected and even if not measurements from all entities are woven it is very unlikely due to the random nature explained above that omission or suppression of measurements will not be discovered.

FIG. 15 is a schematic diagram illustrating an example of measurements having different periodicities according to an embodiment. In this example, multiple measurements with different periodicities are shown to simply illustrate the concept and/or possibility of combining multiple measurements into a repeatable pattern.

FIG. 16 is a schematic signaling and action diagram illustrating an example of actions by different entities involved in an overall controlled collection of measurement data according to an embodiment.

1 - Collection

Determine weaving pattern parameters and send to weaver and verifier at collection.

2 - Weaver

Weaver applies parameters to its weave pattern generator (pattern = order of nodes and possibly which nodes to omit). Determine first node in pattern, and set running has to its init value.

Send running hash to node with instruction to get measurement(s).

3 - Node

Receive weaver instruction and measure data and compute hash over incoming running hash and measured data. Return measurement and updated running hash to weaver (and running signature of updated running hash)

4 - Weaver

Possibly check returned updated running hash with node's returned measurement and set current running hash to returned has if ok. Send measurement and hash to collector, when needed.

If not all nodes processed, continue with next node for measurement weaving

5 - Verifier/collection

Initiate weave pattern generator and start processing returned data from weaver.

For each returned measurement compute hash and check signature and update running reference hash or perform computations at the end of measurement collection.

The collector may instruct a weaver to update its weave pattern generator.

It will be appreciated that the methods and arrangements described herein can be implemented, combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Alternatively, or as a complement, at least some of the steps, functions, procedures, modules and/or blocks described herein may be implemented in software such as a computer program for execution by suitable processing circuitry such as one or more processors or processing units. The terms "processing circuitry" and "processor" may be used interchangeably in parts of this disclosure.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

According to a further aspect, there is provided a system configured to support protected collection of measurement data, representative of usage of network capabilities within a communication network, related to at least two logical and/or physical entities or nodes, also referred to as managed entities, managed by a management system associated with the communication network.

In this example, the system is configured to combine measurement data related to a set of at least two of the managed entities according to a controllable (detectable) pattern. The controllable pattern is defining at least the order of managed entities in which the combining of measurement data is to be performed. The system is also configured to enable the combined measurement data to be collected for validation of existence of the controllable pattern in the combined measurement data.

By way of example, the system may be configured to cryptographically combine measurement data (e.g. by hashing measurement data) related to the set of at least two of the managed entities according to the controllable pattern.

For example, the system may be configured to prepare the combined measurement data for transfer towards a measurement collection system for enabling validation of existence of the controllable pattern in the combined measurement data.

When the system is configured to combine measurement data, the system may alternatively be referred to as a combiner.

FIG. 17 is a schematic block diagram illustrating an example of a system and/or combiner according to an embodiment.

In this particular example, the system and/or combiner 100 comprises processing circuitry 110 including one or more processors, and a memory 120, the memory 120 comprising instructions executable by the processing circuitry 110, whereby the system and/or combiner 100 is operative to support protected collection of measurement data.

In other words, the processing circuitry 110 is operative to perform at least some of the steps, actions and/or functions described herein, including the operations of the system and/or combiner 100.

Optionally, the system and/or combiner 100 may also include a communication circuit 130. The communication circuit 130 may include functions for wired and/or wireless communication with other devices and/or network nodes in the network. In a particular example, the communication circuit 130 may be based on radio circuitry for communication with one or more other nodes, including transmitting and/or receiving information. The communication circuit 130 may be interconnected to the processing circuitry 110 and/or memory 120. By way of example, the communication circuit 130 may include any of the following: a receiver, a transmitter, a transceiver, input/output (I/O) circuitry, input port(s) and/or output port(s).

According to another aspect, there is provided a network entity arranged between at least a subset of the managed entities and the management system. The network entity comprises a system such as the above described system and/or combiner configured to support protected collection of measurement data.

FIG. 18A is a schematic block diagram illustrating an example of a network entity 40; 200 comprising a system and/or combiner 100 according to an embodiment.

By way of example, the network entity 40; 200 may be a network node or part thereof and/or a cloud-based network device. For example, the network entity 40; 200 may be a proxy unit, as previously indicated.

According to yet another aspect, there is provided a managed entity comprising a system and/or combiner configured to support protected collection of measurement data.

FIG. 18B is a schematic block diagram illustrating an example of a managed entity 15; 300 comprising a system and/or combiner 100 according to an embodiment.

By way of example, the system and/or combiner 100 may be a hash module included in the managed entity 15; 300, as previously indicated.

According to another aspect, there is provided a controller system configured to support protected collection of measurement data, representative of usage of network capabilities within a communication network, related to at least two logical and/or physical entities or nodes, also referred to as managed entities, managed by a management system associated with the communication network.

In this example, the system is configured to control combining of measurement data related to a set of at least two of the managed entities according to a controllable pattern. The controllable pattern is defining at least the order of managed entities in which the combining of measurement data is to be performed.

The system is further configured to enable combined measurement data to be collected for validation of existence of the controllable pattern in the combined measurement data.

FIG. 19A is a schematic block diagram illustrating an example of a controller system according to an embodiment.

In this particular example, the controller system 400 comprises processing circuitry 410 including one or more processors, and a memory 420, the memory 420 comprising instructions executable by the processing circuitry 410, whereby the system and/or combiner 400 is operative to support protected collection of measurement data.

In other words, the processing circuitry 410 is operative to perform at least some of the steps, actions and/or functions described herein, including the operations of the controller system 400.

Optionally, the controller system 400 may also include a communication circuit 430. The communication circuit 430 may include functions for wired and/or wireless communication with other devices and/or network nodes in the network. In a particular example, the communication circuit 430 may be based on radio circuitry for communication with one or more other nodes, including transmitting and/or receiving information. The communication circuit 430 may be interconnected to the processing circuitry 410 and/or memory 420. By way of example, the communication circuit 430 may include any of the following: a receiver, a transmitter, a transceiver, input/output (I/O) circuitry, input port(s) and/or output port(s).

According to still another aspect, there is provided a network entity arranged between at least a subset of the managed entities and the management system. The network entity comprises a controller system such as the above described controller system configured to support protected collection of measurement data.

FIG. 19B is a schematic block diagram illustrating an example of a network entity 40; 500 comprising a controller system 400 configured to support protected collection of measurement data according to an embodiment.

By way of example, the network entity 40; 500 may be a network node or part thereof and/or a cloud-based network device. For example, the network entity 40; 500 may be a proxy unit, as previously indicated.

According to yet another aspect, there is provided a validation system configured to support protected collection of measurement data, representative of usage of network capabilities within a communication network, related to at least two logical and/or physical entities or nodes, also referred to as managed entities, managed by a management system associated with the communication network.

In this example, the system is configured to receive combined measurement data related to a set of at least two of the managed entities. The system is further configured to check existence of a controllable pattern in the combined measurement data to enable detection of missing or otherwise modified measurement data due to errors or fraudulent behavior, wherein the controllable pattern is defining at least the order of managed entities in which combining of measurement data is to be performed.

FIG. 20A is a schematic block diagram illustrating an example of a validation system according to an embodiment.

In this particular example, the validation system 35; 600 comprises processing circuitry 610 including one or more processors, and a memory 620, the memory 620 comprising instructions executable by the processing circuitry 610, whereby the validation system 35; 600 is operative to support protected collection of measurement data.

In other words, the processing circuitry 610 is operative to perform at least some of the steps, actions and/or functions described herein, including the operations of the validation system 600.

Optionally, the validation system 600 may also include a communication circuit 630. The communication circuit 630 may include functions for wired and/or wireless communication with other devices and/or network nodes in the network. In a particular example, the communication circuit 630 may be based on radio circuitry for communication with one or more other nodes, including transmitting and/or receiving information. The communication circuit 630 may be interconnected to the processing circuitry 610 and/or memory 620. By way of example, the communication circuit 630 may include any of the following: a receiver, a transmitter, a transceiver, input/output (I/O) circuitry, input port(s) and/or output port(s).

According to still another aspect, there is provided a network entity comprising a system such as the above described validation system configured to support protected collection of measurement data.

FIG. 20B is a schematic block diagram illustrating an example of a network entity 30; 700 comprising a validation system 35; 600 configured to support protected collection of measurement data according to an embodiment.

For example, the network entity 30; 700 may be a collection system configured to collect the measurement data from the managed entities.

By way of example, the network entity 30; 700 may be a network node or part thereof and/or a cloud-based network device.

FIG. 21 is a schematic diagram illustrating an example of a computer-implementation according to an embodiment.

In this particular example, at least some of the steps, functions, procedures, modules and/or blocks described herein are implemented in a computer program 825; 835, which is loaded into the memory 820 for execution by processing circuitry including one or more processors 810. The processor(s) 810 and memory 820 are interconnected to each other to enable normal software execution. An optional input/output device 840 may also be interconnected to the processor(s) 810 and/or the memory 820 to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors 810 is thus configured to perform, when executing the computer program 825, well-defined processing tasks such as those described herein.

The processing circuitry does not have to be dedicated to only execute the above-described steps, functions, procedure and/or blocks, but may also execute other tasks.

In a particular embodiment, there is provided a computer program 825; 835 for supporting, when executed, protected collection of measurement data, representative of usage of network capabilities within a communication network, related to at least two logical and/or physical entities or nodes, also referred to as managed entities, managed by a management system associated with the communication network.

In this example, the computer program 825; 835 comprises instructions, which when executed by at least one processor 810, cause the system to:

- combine measurement data related to a set of at least two of the managed entities according to a controllable and/or detectable pattern, the controllable pattern defining at least the order of managed entities in which the combining of measurement data is to be performed; and
- enable the combined measurement data to be collected for validation of existence of the controllable pattern in the combined measurement data.

In another particular embodiment, there is provided a computer program 825; 835 for supporting, when executed, protected collection of measurement data, representative of usage of network capabilities within a communication network, related to at least two logical and/or physical entities or nodes, also referred to as managed entities, managed by a management system associated with the communication network.

In this example, the computer program 825; 835 comprises instructions, which when executed by at least one processor 810, cause the system to:

- control combining of measurement data related to a set of at least two of the managed entities according to a controllable pattern, the controllable pattern defining at least the order of managed entities in which the combining of measurement data is to be performed; and
- enable combined measurement data to be collected for validation of existence of the controllable pattern in the combined measurement data.

In yet another particular embodiment, there is provided a computer program 825; 835 for supporting, when executed, protected collection of measurement data, representative of usage of network capabilities within a communication network, related to at least two logical and/or physical entities or nodes, also referred to as managed entities, managed by a management system associated with the communication network.

In this example, the computer program 825; 835 comprises instructions, which when executed by at least one processor 810, cause the system to:

- receive combined measurement data related to a set of at least two of the managed entities, and
- validate existence of a controllable pattern in the combined measurement data, the controllable pattern defining at least the order of managed entities in which combining of measurement data is to be performed.

According to another aspect, there is provided a computer-program product comprising a non-transitory computer-readable medium 820; 830 having stored thereon such a computer program 825; 835.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

By way of example, the software or computer program 825; 835 may be realized as a computer program product, which is normally carried or stored on a computer-readable medium 820; 830, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Alternatively, it is possible to realize such module(s) predominantly by hardware modules, or alternatively by hardware, with suitable interconnections between relevant modules. Particular examples include one or more suitably configured digital signal processors and other known electronic circuits, e.g. discrete logic gates interconnected to perform a specialized function, and/or Application Specific Integrated Circuits (ASICs) as previously mentioned. Other examples of usable hardware include input/output (I/O) circuitry and/or circuitry for receiving and/or sending signals. The extent of software versus hardware is purely implementation selection.

For example, the virtual apparatus may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

The term module or unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

It is also becoming increasingly popular to provide computing services (hardware and/or software) in network devices such as network nodes and/or servers where the resources are delivered as a service to remote locations over a network. By way of example, this means that functionality, as described herein, can be distributed or re-located to one or more separate physical nodes or servers. The functionality may be re-located or distributed to one or more jointly acting physical and/or virtual machines that can be positioned in separate physical node(s), i.e. in the so-called cloud. This is sometimes also referred to as cloud computing, which is a model for enabling ubiquitous on-demand network access to a pool of configurable computing resources such as networks, servers, storage, applications and general or customized services.

There are different forms of virtualization that can be useful in this context, including one or more of:

- Consolidation of network functionality into virtualized software running on customized or generic hardware. This is sometimes referred to as network function virtualization.

- Co-location of one or more application stacks, including operating system, running on separate hardware onto a single hardware platform. This is sometimes referred to as system virtualization, or platform virtualization.

- Co-location of hardware and/or software resources with the objective of using some advanced domain level scheduling and coordination technique to gain increased system resource utilization. This is sometimes referred to as resource virtualization, or centralized and coordinated resource pooling.

Although it may often desirable to centralize functionality in so-called generic data centers, in other scenarios it may in fact be beneficial to distribute functionality over different parts of the network.

A Network Device (ND) may generally be seen as an electronic device being communicatively connected to other electronic devices in the network.

By way of example, the network device may be implemented in hardware, software or a combination thereof. For example, the network device may be a special-purpose network device or a general-purpose network device, or a hybrid thereof.

A special-purpose network device may use custom processing circuits and a proprietary operating system (OS), for execution of software to provide one or more of the features or functions disclosed herein.

A general-purpose network device may use common off-the-shelf (COTS) processors and a standard OS, for execution of software configured to provide one or more of the features or functions disclosed herein.

By way of example, a special-purpose network device may include hardware comprising processing or computing resource(s), which typically include a set of one or more processors, and physical network interfaces (NIs), which sometimes are called physical ports, as well as non-transitory machine readable storage media having stored thereon software. A physical NI may be seen as hardware in a network device through which a network connection is made, e.g. wirelessly through a wireless network interface controller (WNIC) or through plugging in a cable to a physical port connected to a network interface controller (NIC). During operation, the software may be executed by the hardware to instantiate a set of one or more software instance(s). Each of the software instance(s), and that part of the hardware that executes that software instance, may form a separate virtual network element.

By way of another example, a general-purpose network device may for example include hardware comprising a set of one or more processor(s), often COTS processors, and network interface controller(s) (NICs), as well as non-transitory machine-readable storage media having stored thereon software. During operation, the processor(s) executes the software to instantiate one or more sets of one or more applications. While one embodiment does not implement virtualization, alternative embodiments may use different forms of virtualization - for example represented by a virtualization layer and software containers. For example, one such alternative embodiment implements operating system-level virtualization, in which case the virtualization layer represents the kernel of an operating system (or a shim executing on a base operating system) that allows for the creation of multiple software containers that may each be used to execute one of a sets of applications. In an example embodiment, each of the software containers (also called virtualization engines, virtual private servers, or jails) is a user space instance (typically a virtual memory space).

These user space instances may be separate from each other and separate from the kernel space in which the operating system is executed; the set of applications running in a given user space, unless explicitly allowed, cannot access the memory of the other processes. Another such alternative embodiment implements full virtualization, in which case: 1) the virtualization layer represents a hypervisor (sometimes referred to as a Virtual Machine Monitor (VMM)) or the hypervisor is executed on top of a host operating system; and 2) the software containers each represent a tightly isolated form of software container called a virtual machine that is executed by the hypervisor and may include a guest operating system.

A hypervisor is the software/hardware that is responsible for creating and managing the various virtualized instances and in some cases the actual physical hardware. The hypervisor manages the underlying resources and presents them as virtualized instances. What the hypervisor virtualizes to appear as a single processor may actually comprise multiple separate processors. From the perspective of the operating system, the virtualized instances appear to be actual hardware components.

A virtual machine is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes.

The instantiation of the one or more sets of one or more applications as well as the virtualization layer and software containers if implemented, are collectively referred to as software instance(s). Each set of applications, corresponding software container if implemented, and that part of the hardware that executes them (be it hardware dedicated to that execution and/or time slices of hardware temporally shared by software containers), forms a separate virtual network element(s).

The virtual network element(s) may perform similar functionality compared to Virtual Network Element(s) (VNEs). This virtualization of the hardware is sometimes referred to as Network Function Virtualization (NFV)). Thus, NFV may be used to consolidate many network equipment types onto industry standard high-volume server hardware, physical switches, and physical storage, which could be located in data centers, NDs, and Customer Premise Equipment (CPE). However, different embodiments may implement one or more of the software container(s) differently. For example, while embodiments are illustrated with each software container corresponding to a VNE, alternative embodiments may implement this correspondence or mapping between software container-VNE at a finer granularity level; it should be understood that the techniques described herein with reference to a correspondence of software containers to VNEs also apply to embodiments where such a finer level of granularity is used.

According to yet another embodiment, there is provided a hybrid network device, which includes both custom processing circuitry/proprietary OS and COTS processors/standard OS in a network device, e.g. in a card or circuit board within a network device ND. In certain embodiments of such a hybrid network device, a platform Virtual Machine (VM), such as a VM that implements functionality of a special-purpose network device, could provide for para-virtualization to the hardware present in the hybrid network device.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

**REFERENCES**

[1] IOTA Tangle, https://blog.iota.org/the-tangle-an-illustrated-introduction-4d5eae6fe8d4

[2] Distributed Ledger Technology for Smart Cities, The Sharing Economy, and Social Compliance, P. Ferraro, C. King, and R. Shorten, Oct 2018, https://arxiv.org/pdf/1807.00649.pdf

**Claims**

1. A method for supporting protected collection of measurement data, representative of usage of network capabilities within a communication network (10), related to at least two logical and/or physical entities or nodes, also referred to as managed entities (15), managed by a management system (20) associated with the communication network (10), wherein said method comprises:

   - combining (S1) measurement data related to a set of at least two of said managed entities (15) according to a controllable pattern, said pattern defining at least the order of managed entities in which the combining of measurement data is to be performed; and
   - enabling (S2) the combined measurement data to be collected for validation of existence of the controllable pattern in the combined measurement data, wherein said step (S2) of enabling the combined measurement data to be collected for validation comprises preparing (S2-1) the combined measurement data for transfer towards a measurement collection system (30) for enabling validation of existence of the controllable pattern in the combined measurement data.

2. The method of claim 1, wherein said step (S1) of combining measurement data comprises cryptographically combining (S1-1) measurement data related to said set of at least two of said managed entities according to said controllable pattern.

3. The method of claim 1, wherein said step (S2) of enabling the combined measurement data to be collected for validation comprises sending (S2-2) the combined measurement data to said measurement collection system (30) via said management system (20).

4. The method of any of the claims 1 to 3, further comprising obtaining (SO) information representative of said controllable pattern for determination of said controllable pattern.

5. The method of any of the claims 1 to 4, wherein said method is performed by a combiner/weaver/controller (40) arranged as a controlling proxy between at least a subset of said managed entities (15) and said management system (20).

6. The method of claim 5, wherein said management system (20) and said managed entities (15) are network customer-controlled, whereas said weaver or combiner (40) is independently controlled by a measurement collection system (30) for enabling network customer-independent validation of measurement data.

**7.** The method of claim 5 or 6, wherein the weaver or combiner (40) cryptographically combines hashed measurement data related to at least one managed entity of said set of at least two managed entities with hashed measurement data related to at least one other managed entity of said set of at least two managed entities.

**8.** The method of claim 7, wherein the weaver or combiner (40) cryptographically combines hashed measurement data by performing hashing of i) the hashed measurement data related to at least one managed entity of said set of at least two managed entities and ii) the hashed measurement data related to at least one other managed entity of said set of at least two managed entities.

**9.** The method of any of the claims 1 to 4, wherein said method is performed by a managed entity (15) being part of said set of at least two of said managed entities from which measurement data is to be combined.

**10.** The method of claim 9, wherein the managed entity (15) cryptographically combines hashed measurement data related to at least one other managed entity of said set of at least two managed entities with hashed measurement data related to the managed entity.

**11.** The method of claim 10, wherein the managed entity (15) cryptographically combines hashed measurement data by performing hashing of i) hashed measurement data related to at least one other managed entity of said set of at least two managed entities and ii) hashed measurement data related to the managed entity to produce a combined hash for validation.

**12.** The method of claim 11, wherein the managed entity (15) sends the combined hash to a controlling proxy (40) arranged between at least a subset of said managed entities (15) and said management system (20), enabling the controlling proxy (40) to send the combined hash to a measurement collection system (30) for validation of existence of the controllable pattern in the combined hash and/or send the combined hash to a next managed entity defined by said order of managed entities in which the combining of measurement data is to be performed for updating the combined hash.

**13.** The method of claim 12, wherein the managed entity (15) digitally signs the combined hash.

**14.** A system (100; 800) configured to support protected collection of measurement data, representative of usage of network capabilities within a communication network (10), related to at least two logical and/or physical entities or nodes, also referred to as managed entities (15), managed by a management system (20) associated with the communication network (10),

wherein said system (100; 800) is configured to combine measurement data related to a set of at least two of said managed entities (15) according to a controllable pattern, said controllable pattern defining at least the order of managed entities in which the combining of measurement data is to be performed; and
wherein said system (100; 800) is configured to enable the combined measurement data to be collected for validation of existence of the controllable pattern in the combined measurement data, and wherein said system (100; 800) is configured to prepare the combined measurement data for transfer towards a measurement collection system (30) for enabling validation of existence of the controllable pattern in the combined measurement data.

**15.** A computer program (825; 835) for supporting, when executed, protected collection of measurement data, representative of usage of network capabilities within a communication network (10), related to at least two logical and/or physical entities or nodes, also referred to as managed entities (15), managed by a management system (20) associated with the communication network (10),
wherein the computer program (825; 835) comprises instructions, which when executed by at least one processor (810), cause the at least one processor to perform operations according to any of claims 1-13.

**Patentansprüche**

**1.** Verfahren zum Unterstützen von geschütztem Erfassen von Messdaten, die eine Nutzung von Netzwerkkapazitäten innerhalb eines Kommunikationsnetzwerks (10) darstellen und sich auf mindestens zwei logische und/oder physische Entitäten oder Knoten beziehen, die auch als verwaltete Entitäten (15) bezeichnet werden und durch ein Verwaltungssystem (20) verwaltet werden, das dem Kommunikationsnetzwerk (10) zugeordnet ist, wobei das Verfahren Folgendes umfasst:

- Kombinieren (S1) von Messdaten, die sich auf einen Satz von mindestens zwei der verwalteten Entitäten (15) beziehen, gemäß einem steuerbaren Muster, wobei das steuerbare Muster mindestens die Reihenfolge der verwalteten Entitäten, in denen das Kombinieren der Messdaten durchzuführen ist, definiert; und
- Ermöglichen (S2) eines Erfassens der kombinierten Messdaten zur Validierung des Vorhandenseins des steuerbaren Musters in den kombinierten Messdaten, wobei der Schritt (S2) des Ermöglichens eines Erfassens der kombinierten Messdaten zur Validierung Vorbereiten (S2-1) der kombinierten Messdaten zur Übertragung an ein Messerfassungssystem (30) umfasst, um die Validierung des Vorhandenseins des steuerbaren Musters in den kombinierten Messdaten zu ermöglichen.

**2.** Verfahren nach Anspruch 1, wobei der Schritt (S1) des Kombinierens von Messdaten kryptografisches Kombinieren (S1-1) von Messdaten, die sich auf den Satz von mindestens zwei der verwalteten Entitäten beziehen, gemäß dem steuerbaren Muster umfasst.

**3.** Verfahren nach Anspruch 1, wobei der Schritt (S2) des Ermöglichens eines Erfassens der kombinierten Messdaten zur Validierung Senden (S2-2) der kombinierten Messdaten an das Messerfassungssystem (30) über das Verwaltungssystem (20) umfasst.

**4.** Verfahren nach einem der Ansprüche 1 bis 3, ferner umfassend Erlangen (SO) von Informationen, die das steuerbare Muster darstellen, zur Bestimmung des steuerbaren Musters.

**5.** Verfahren nach einem der Ansprüche 1 bis 4, wobei das Verfahren durch einen Kombinator/einen Weaver/eine Steuerung (40) durchgeführt wird, der/die als steuernder Proxy zwischen mindestens einem Teilsatz der verwalteten Entitäten (15) und dem Verwaltungssystem (20) angeordnet ist.

**6.** Verfahren nach Anspruch 5, wobei das Verwaltungssystem (20) und die verwalteten Entitäten (15) von einem Netzwerkkunden gesteuert werden, während der Weaver oder der Kombinator (40) unabhängig durch ein Messerfassungssystem (30) zum Ermöglichen einer von dem Netzwerkkunden unabhängigen Validierung der Messdaten gesteuert wird.

**7.** Verfahren nach Anspruch 5 oder 6, wobei der Weaver oder der Kombinator (40) gehashte Messdaten, die sich auf mindestens eine verwaltete Entität aus dem Satz von mindestens zwei verwalteten Entitäten beziehen, kryptografisch mit gehashten Messdaten, die sich auf mindestens eine andere verwaltete Entität aus dem Satz von mindestens zwei verwalteten Entitäten beziehen, kombiniert.

**8.** Verfahren nach Anspruch 7, wobei der Weaver oder der Kombinator (40) gehashte Messdaten durch Durchführen eines Hashings von i) den gehashten Messdaten, die sich auf mindestens eine verwaltete Entität des Satzes von mindestens zwei verwalteten Entitäten beziehen, und ii) den gehashten Messdaten, die sich auf mindestens eine andere verwaltete Entität des Satzes von mindestens zwei verwalteten Entitäten beziehen, kryptografisch kombiniert.

**9.** Verfahren nach einem der Ansprüche 1 bis 4, wobei das Verfahren durch eine verwaltete Entität (15), die Teil des Satzes von mindestens zwei der verwalteten Entitäten ist, aus denen Messdaten zu kombinieren sind, durchgeführt wird.

**10.** Verfahren nach Anspruch 9, wobei die verwaltete Entität (15) gehashte Messdaten, die sich auf mindestens eine andere verwaltete Entität aus dem Satz von mindestens zwei verwalteten Entitäten beziehen, mit gehashten Messdaten, die sich auf die verwaltete Entität beziehen, kryptografisch kombiniert.

**11.** Verfahren nach Anspruch 10, wobei die verwaltete Entität (15) gehashte Messdaten durch Durchführen von einem Hashing von i) gehashten Messdaten, die sich auf mindestens eine andere verwaltete Entität des Satzes von mindestens zwei verwalteten Entitäten beziehen, und ii) gehashten Messdaten, die sich auf die verwaltete Entität beziehen, kryptografisch kombiniert, um einen kombinierten Hash zur Validierung zu erstellen.

**12.** Verfahren nach Anspruch 11, wobei die verwaltete Entität (15) den kombinierten Hash an einen steuernden Proxy (40) sendet, der zwischen mindestens einem Teilsatz von den verwalteten Entitäten (15) und dem Verwaltungssystem (20) angeordnet ist, wodurch es dem steuernden Proxy (40) ermöglicht wird, den kombinierten Hash zur Validierung des Vorhandenseins des steuerbaren Musters in dem kombinierten Hash an ein Messerfassungssystem (30) zu senden und/oder den kombinierten Hash an eine nächste verwaltete Entität zu senden, die durch die Reihenfolge der verwalteten Entitäten, in denen das Kombinieren von Messdaten zum Aktualisieren des kombinierten Hashs durchzuführen ist, definiert wird.

**13.** Verfahren nach Anspruch 12, wobei die verwaltete Entität (15) den kombinierten Hash digital signiert.

**14.** System (100; 800), das dazu konfiguriert ist, geschütztes Erfassen von Messdaten zu unterstützen, die eine Nutzung von Netzwerkkapazitäten innerhalb eines Kommunikationsnetzwerks (10) darstellen und sich auf mindestens zwei logische und/oder physische Entitäten oder Knoten beziehen, die auch als verwaltete Entitäten (15) bezeichnet werden und durch ein Verwaltungssystem (20) verwaltet werden, das dem Kommunikationsnetzwerk (10) zugeordnet ist,

wobei das System (100; 800) dazu konfiguriert ist, Messdaten, die sich auf einen Satz von mindestens zwei der verwalteten Entitäten (15) beziehen, gemäß einem steuerbaren Muster zu kombinieren, wobei das steuerbare Muster mindestens die Reihenfolge der verwalteten Entitäten, in denen das Kombinieren von Messdaten durchzuführen ist, definiert; und
wobei das System (100; 800) dazu konfiguriert ist, ein Erfassen der kombinierten Messdaten zur Validierung eines Vorhandenseins des steuerbaren Musters in den kombinierten Messdaten zu ermöglichen, und wobei das System (100; 800) dazu konfiguriert ist, die kombinierten Messdaten zur Übertragung an ein Messerfassungssystem (30) zum Ermöglichen der Validierung des Vorhandenseins des steuerbaren Musters in den kombinierten Messdaten vorzubereiten.

**15.** Computerprogramm (825; 835) zum Unterstützen, wenn es ausgeführt wird, einer geschützten Erfassung von Messdaten, die eine Nutzung von Netzwerkkapazitäten innerhalb eines Kommunikationsnetzwerks (10) darstellen und sich auf mindestens zwei logische und/oder physische Entitäten oder Knoten beziehen, die auch als verwaltete Entitäten (15) bezeichnet werden und durch ein Verwaltungssystem (20) verwaltet werden, das dem Kommunikationsnetzwerk (10) zugeordnet ist,
wobei das Computerprogramm (825; 835) Anweisungen umfasst, die, wenn sie durch mindestens einen Prozessor (810) ausgeführt werden, den mindestens einen Prozessor veranlassen, Vorgänge nach einem der Ansprüche 1-13 durchzuführen.

## Revendications

**1.** Procédé de prise en charge de collecte protégée de données de mesure, représentatives de l'utilisation de capacités de réseau dans un réseau de communication (10), liées à au moins deux entités ou nœuds logiques et/ou physiques, également appelés entités gérées (15), gérées par un système de gestion (20) associé au réseau de communication (10), dans lequel ledit procédé comprend :

- la combinaison (S1) de données de mesure relatives à un ensemble d'au moins deux desdites entités gérées (15) selon un modèle commandable, ledit modèle commandable définissant au moins l'ordre **d'entités** gérées dans lequel la combinaison de données de mesure doit être effectuée ; et
- la permission (S2) de la collecte des données de mesure combinées pour la validation de l'existence du modèle commandable dans les données de mesure combinées, dans lequel l'étape (S2) consistant à permettre la collecte des données de mesure combinées pour la validation consiste à préparer (S2-1) les données de mesure combinées pour le transfert vers un système de collecte de mesure (30) afin de permettre la validation de l'existence du modèle commandable dans les données de mesure combinées.

**2.** Procédé selon la revendication 1, dans lequel ladite étape (S1) de combinaison de données de mesure comprend la combinaison cryptographique (S1-1) de données de mesure relatives audit ensemble d'au moins deux desdites entités gérées selon ledit modèle commandable.

**3.** Procédé selon la revendication 1, dans lequel ladite étape (S2) consistant à permettre la collecte de données de mesure combinées pour la validation comprend l'envoi (S2-2) des données de mesure combinées audit système de collecte de mesure (30) par l'intermédiaire dudit système de gestion (20).

**4.** Procédé selon l'une quelconque des revendications 1 à 3, comprenant en outre l'obtention (SO) d'informations représentatives dudit modèle commandable pour la détermination dudit modèle commandable.

**5.** Procédé selon l'une quelconque des revendications 1 à 4, dans lequel ledit procédé est mis en œuvre par un combinateur/ tisseur/dispositif de commande (40) agencé en tant que mandataire de commande entre au moins un sous-ensemble desdites entités gérées (15) et ledit système de gestion (20).

**6.** Procédé selon la revendication 5, dans lequel ledit système de gestion (20) et lesdites entités gérées (15) sont commandés par le client de réseau, tandis que ledit tisseur ou combinateur (40) est commandé indépendamment par un système de collecte de mesure (30) pour permettre une validation des données de mesure indépendante du client de réseau.

**7.** Procédé selon la revendication 5 ou 6, dans lequel le tisseur ou le combinateur (40) combine cryptographiquement des données de mesure hachées relatives à au moins une entité gérée dudit ensemble d'au moins deux entités gérées avec des données de mesure hachées relatives à au moins une autre entité gérée dudit ensemble d'au moins deux entités gérées.

**8.** Procédé selon la revendication 7, dans lequel le tisseur ou le combinateur (40) combine cryptographiquement les données de mesure hachées en effectuant un hachage i) des données de mesure hachées relatives à au moins une entité gérée dudit ensemble d'au moins deux entités gérées et ii) des données de mesure hachées relatives à au moins une autre entité gérée dudit ensemble d'au moins deux entités gérées.

**9.** Procédé selon l'une quelconque des revendications 1 à 4, dans lequel ledit procédé est mis en œuvre par une entité gérée (15) faisant partie dudit ensemble d'au moins deux entités gérées à partir desquelles des données de mesure doivent être combinées.

**10.** Procédé selon la revendication 9, dans lequel l'entité gérée (15) combine cryptographiquement des données de mesure hachées relatives à au moins une autre entité gérée dudit ensemble d'au moins deux entités gérées avec des données de mesure hachées relatives à l'entité gérée.

**11.** Procédé selon la revendication 10, dans lequel l'entité gérée (15) combine cryptographiquement des données de mesure hachées en effectuant un hachage i) des données de mesure hachées relatives à au moins une autre entité gérée dudit ensemble d'au moins deux entités gérées et ii) des données de mesure hachées relatives à l'entité gérée afin de produire un hachage combiné pour la validation.

**12.** Procédé selon la revendication 11, dans lequel l'entité gérée (15) envoie le hachage combiné à un mandataire de commande (40) agencé entre au moins un sous-ensemble desdites entités gérées (15) et ledit système de gestion (20), permettant au mandataire de commande (40) d'envoyer le hachage combiné à un système de collecte de mesure (30) pour la validation de l'existence du motif commandable dans le hachage combiné et/ou d'envoyer le hachage combiné à une entité gérée suivante définie par ledit ordre d'entités gérées dans lequel la combinaison de données de mesure doit être effectuée pour la mise à jour du hachage combiné.

**13.** Procédé selon la revendication 12, dans lequel l'entité gérée (15) signe numériquement le hachage combiné.

**14.** Système (100 ; 800) configuré pour prendre en charge la collecte protégée de données de mesure, représentatives de l'utilisation des capacités de réseau dans un réseau de communication (10), liées à au moins deux entités ou nœuds logiques et/ou physiques, également appelés entités gérées (15), gérées par un système de gestion (20) associé au réseau de communication (10),

dans lequel ledit système (100 ; 800) est configuré pour combiner des données de mesure relatives à un ensemble d'au moins deux desdites entités gérées (15) selon un modèle commandable, ledit modèle commandable définissant au moins l'ordre d'entités gérées dans lequel la combinaison de données de mesure doit être effectuée ; et

dans lequel ledit système (100 ; 800) est configuré pour permettre la collecte des données de mesure combinées pour la validation de l'existence du modèle commandable dans les données de mesure combinées, et dans lequel ledit système (100 ; 800) est configuré pour préparer les données de mesure combinées pour le transfert vers un système de collecte de mesure (30) afin de permettre la validation de l'existence du modèle commandable dans les données de mesure combinées.

**15.** Programme informatique (825 ; 835) destiné à prendre en charge, lorsqu'il est exécuté, la collecte protégée de données de mesure, représentatives de l'utilisation de capacités de réseau dans un réseau de communication (10), liées à au moins deux entités ou nœuds logiques et/ou physiques, également appelés entités gérées (15), gérées par un système de gestion (20) associé au réseau de communication (10),
dans lequel le programme informatique (825 ; 835) comprend des instructions qui, lorsqu'elles sont exécutées par au moins un processeur (810), amènent l'au moins un processeur à effectuer des opérations selon l'une quelconque des revendications 1 à 13.

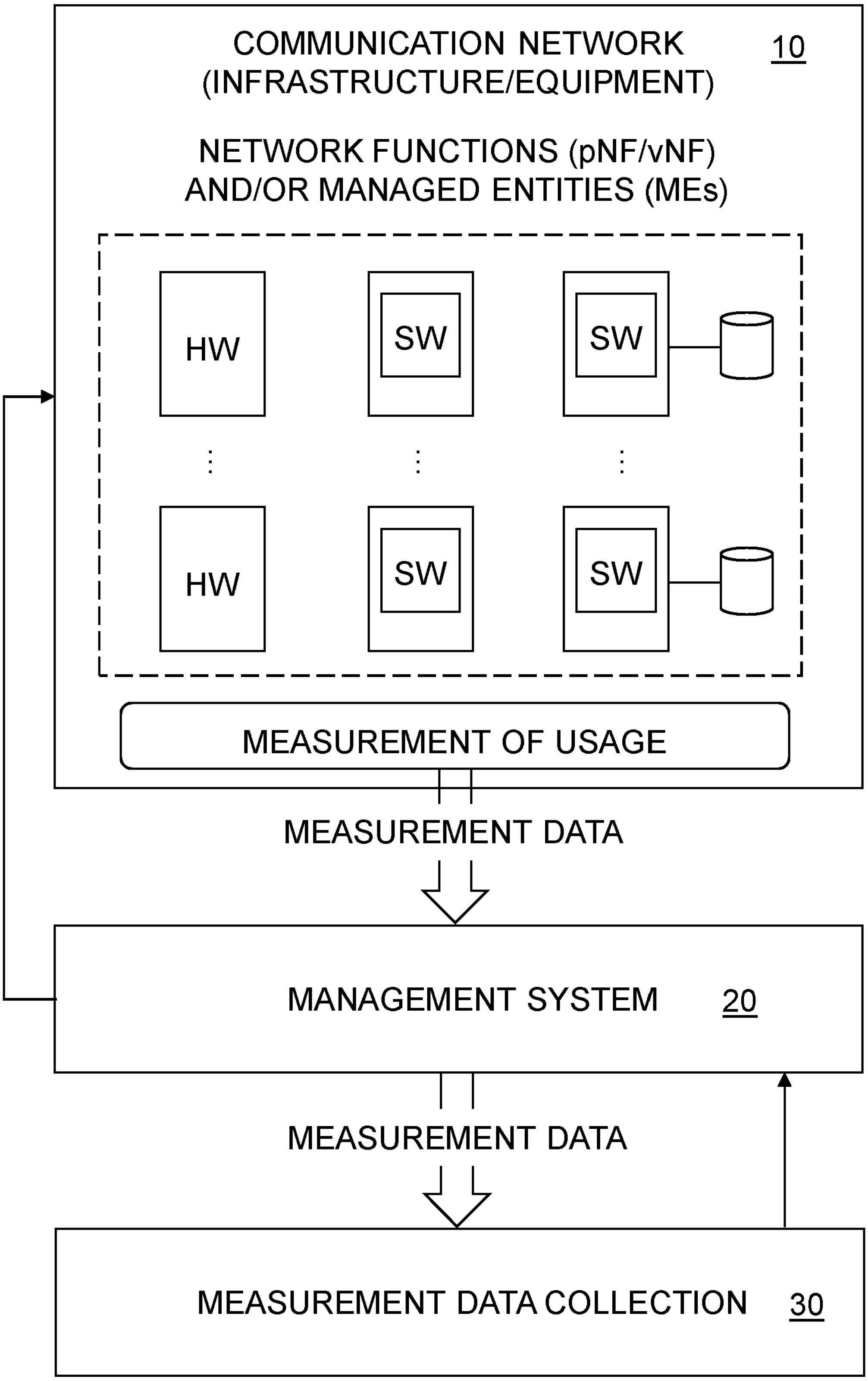


*Fig. 1 (Prior art)*

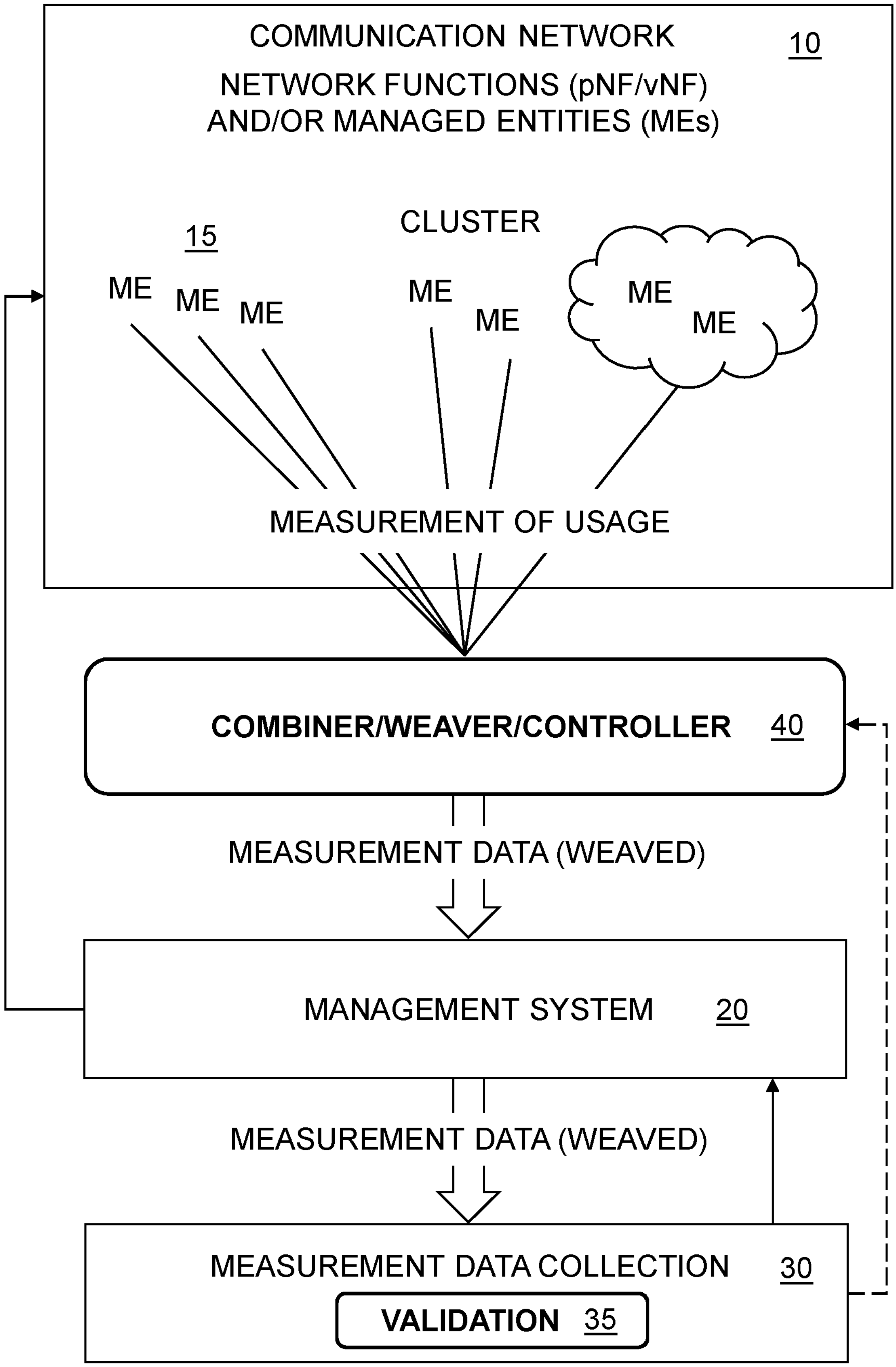
COMMUNICATION NETWORK
10
NETWORK FUNCTIONS (pNF/vNF)
AND/OR MANAGED ENTITIES (MEs)
15
CLUSTER
ME
ME
ME
ME
ME
ME
ME
MEASUREMENT OF USAGE
COMBINER/WEAVER/CONTROLLER
40
MEASUREMENT DATA (WEAVED)
MANAGEMENT SYSTEM
20
MEASUREMENT DATA (WEAVED)
MEASUREMENT DATA COLLECTION
30
VALIDATION
35

*Fig. 2*

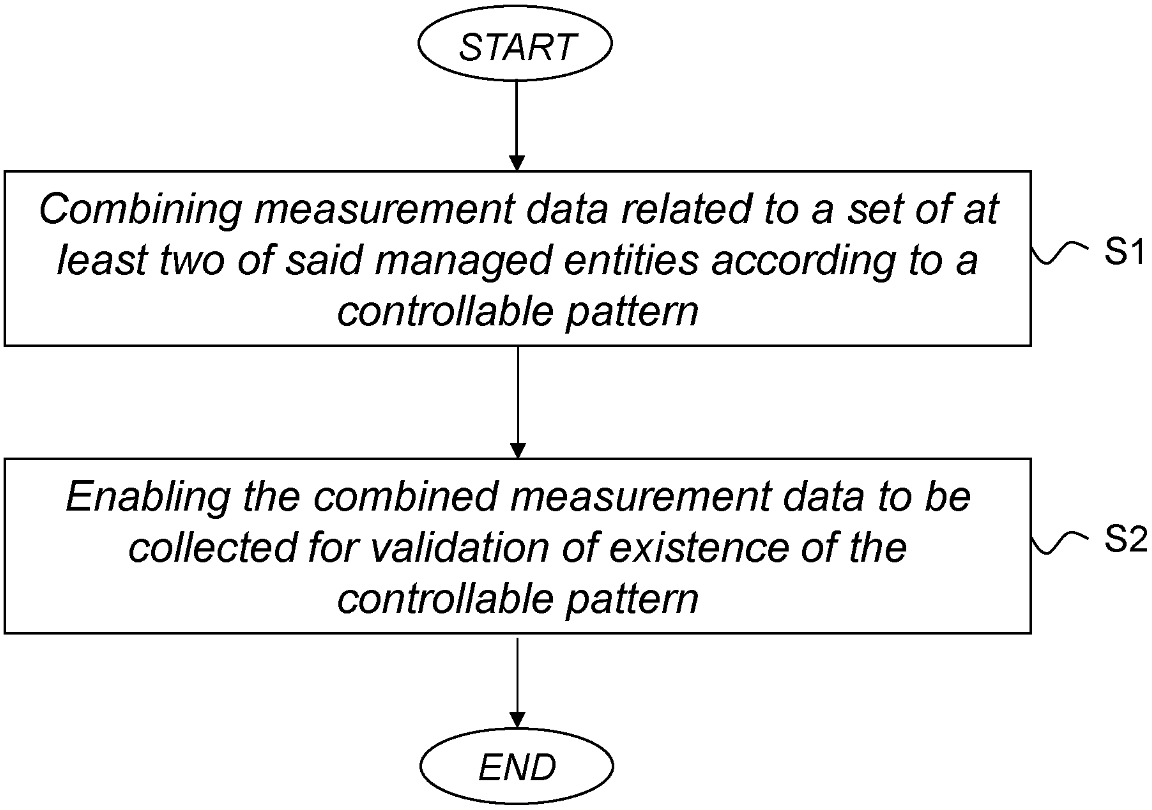
START
Combining measurement data related to a set of at least two of said managed entities according to a controllable pattern
S1
Enabling the combined measurement data to be collected for validation of existence of the controllable pattern
S2
END

Fig. 3A

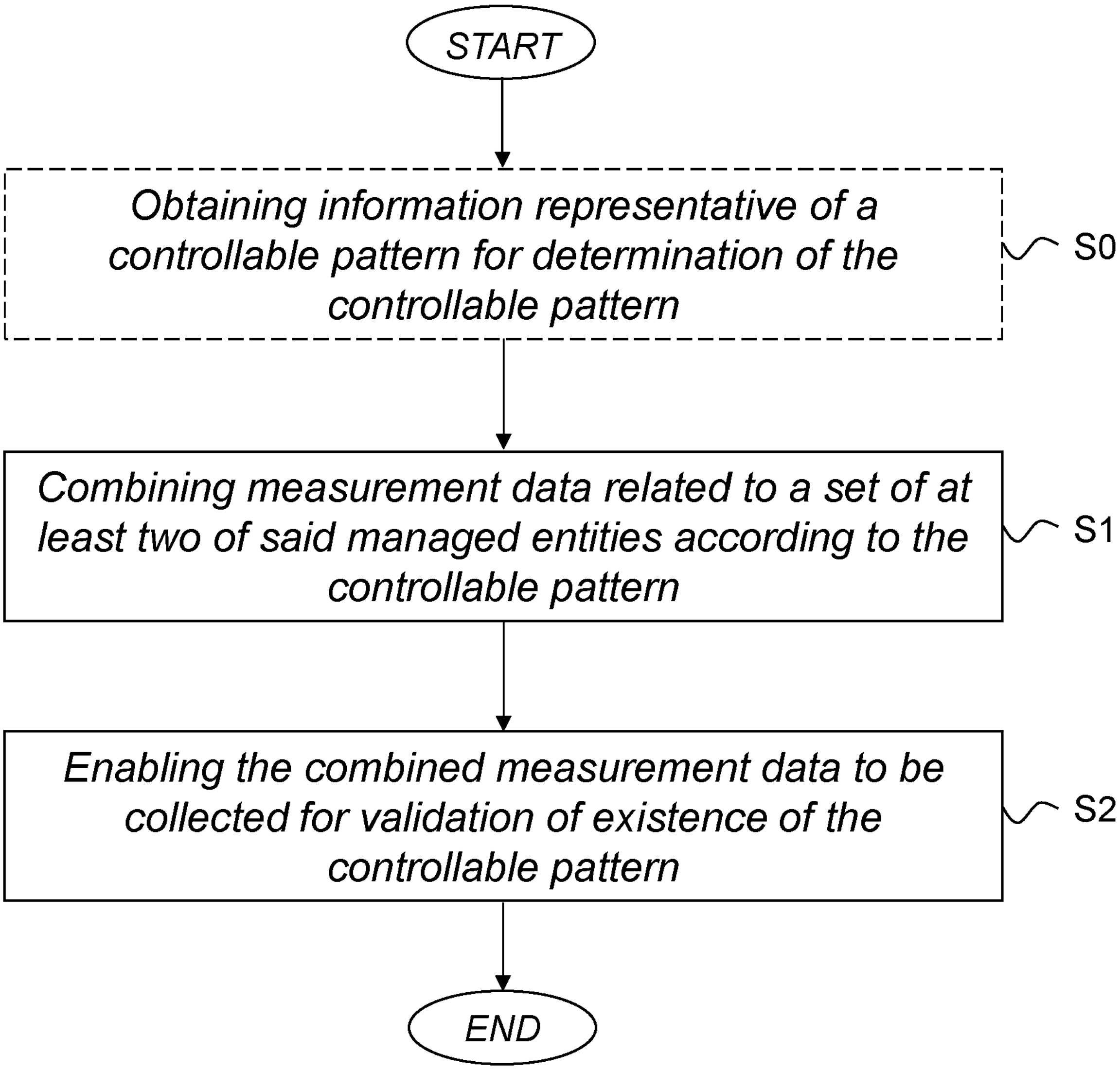
START
Obtaining information representative of a controllable pattern for determination of the controllable pattern
S0
Combining measurement data related to a set of at least two of said managed entities according to the controllable pattern
S1
Enabling the combined measurement data to be collected for validation of existence of the controllable pattern
S2
END

Fig. 3B

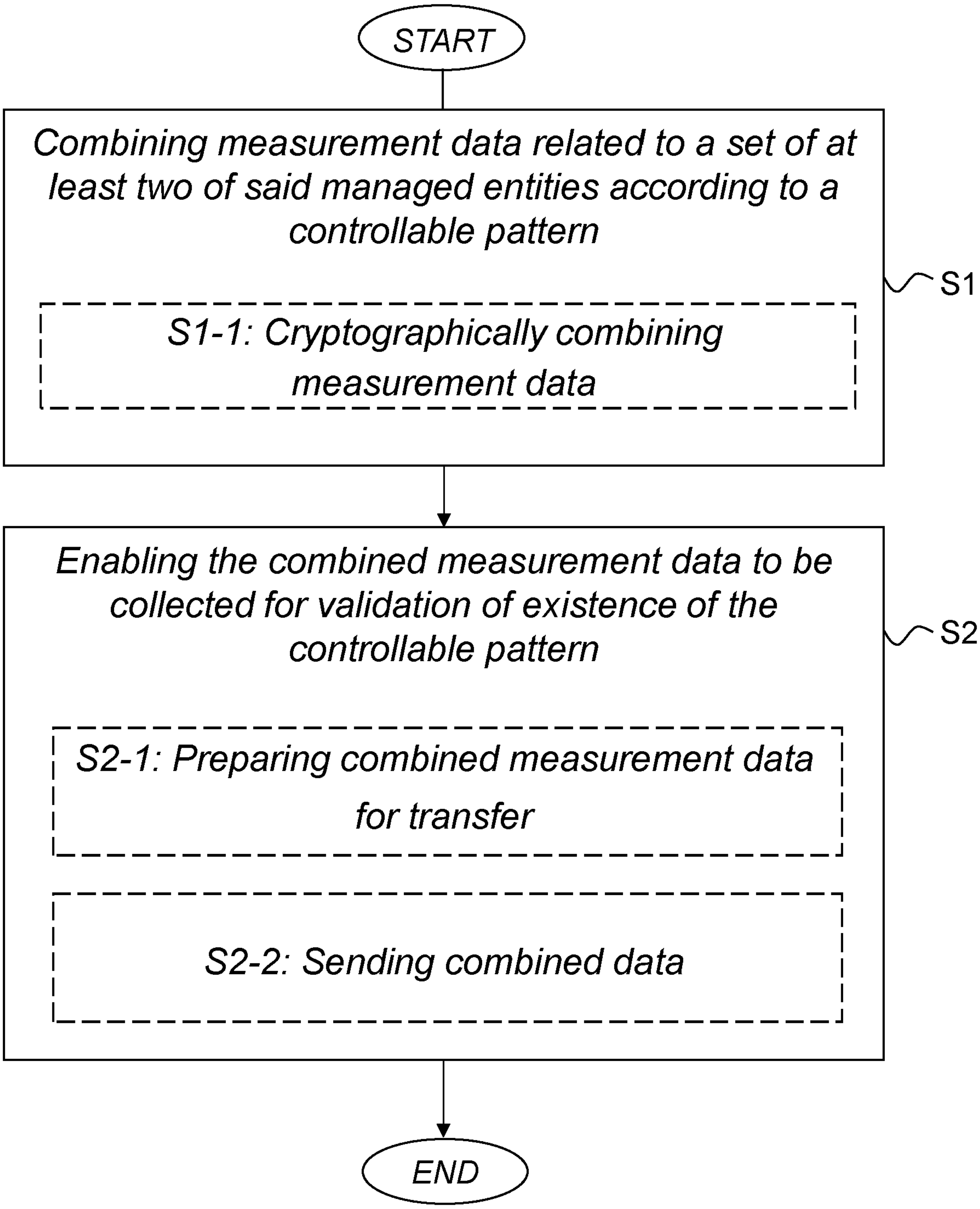
START
Combining measurement data related to a set of at least two of said managed entities according to a controllable pattern
S1
S1-1: Cryptographically combining measurement data
Enabling the combined measurement data to be collected for validation of existence of the controllable pattern
S2
S2-1: Preparing combined measurement data for transfer
S2-2: Sending combined data
END

Fig. 4

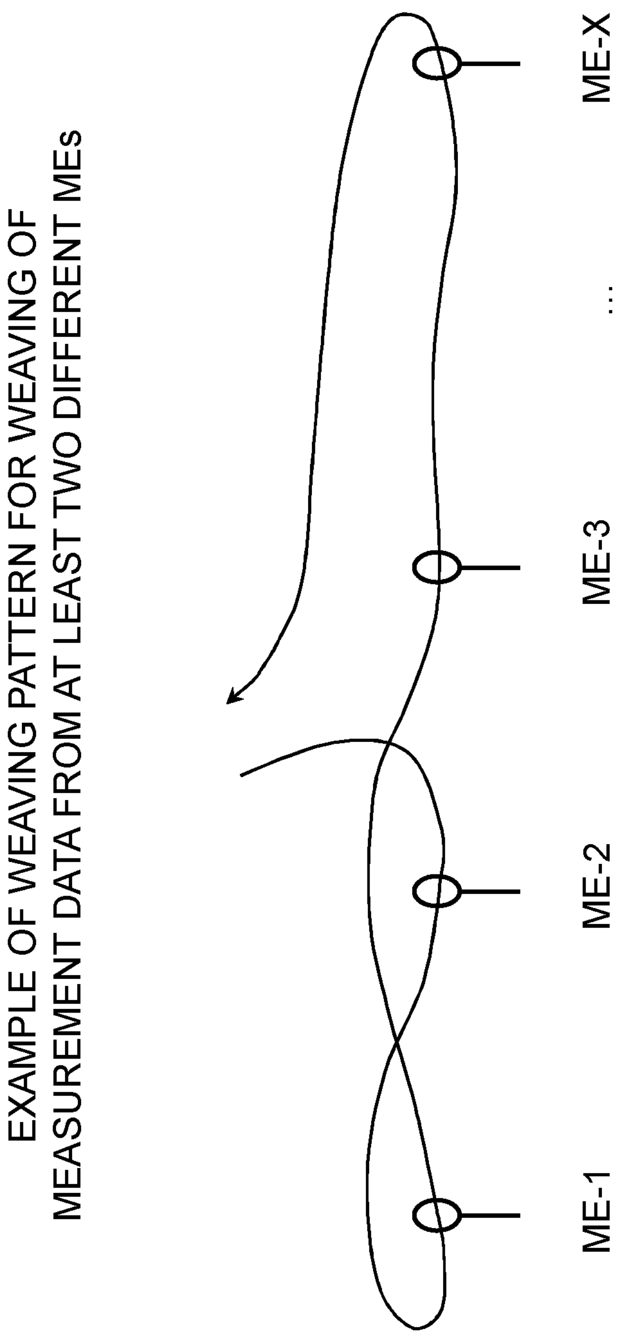
EXAMPLE OF WEAVING PATTERN FOR WEAVING OF
MEASUREMENT DATA FROM AT LEAST TWO DIFFERENT MEs
ME-1
ME-2
ME-3
...
ME-X

*Fig. 5*

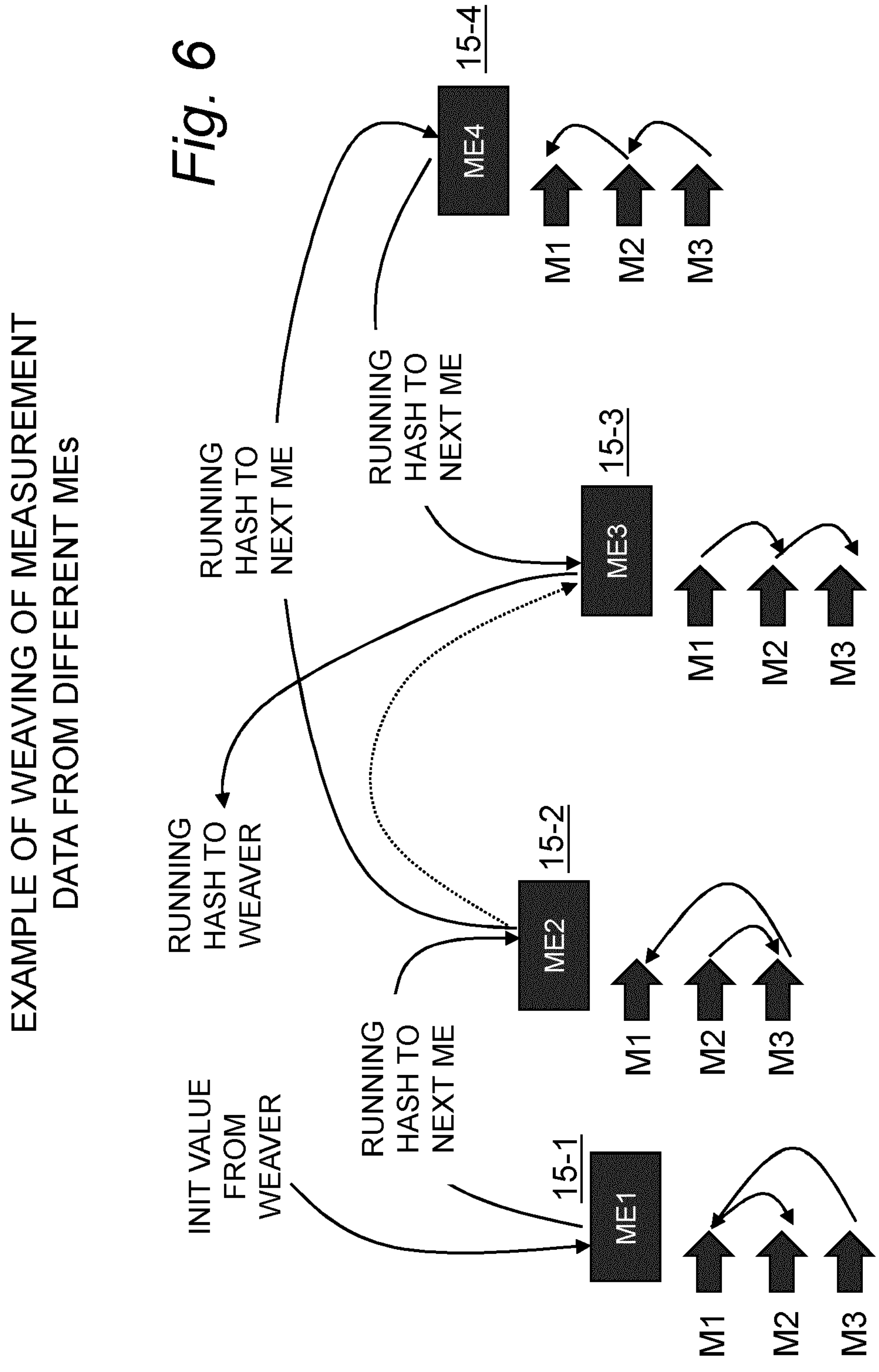
EXAMPLE OF WEAVING OF MEASUREMENT DATA FROM DIFFERENT MEs
INIT VALUE FROM WEAVER
RUNNING HASH TO NEXT ME
RUNNING HASH TO WEAVER
RUNNING HASH TO NEXT ME
RUNNING HASH TO NEXT ME
ME1
ME2
ME3
ME4
15-1
15-2
15-3
15-4
M1
M2
M3
M1
M2
M3
M1
M2
M3
M1
M2
M3

Fig. 6

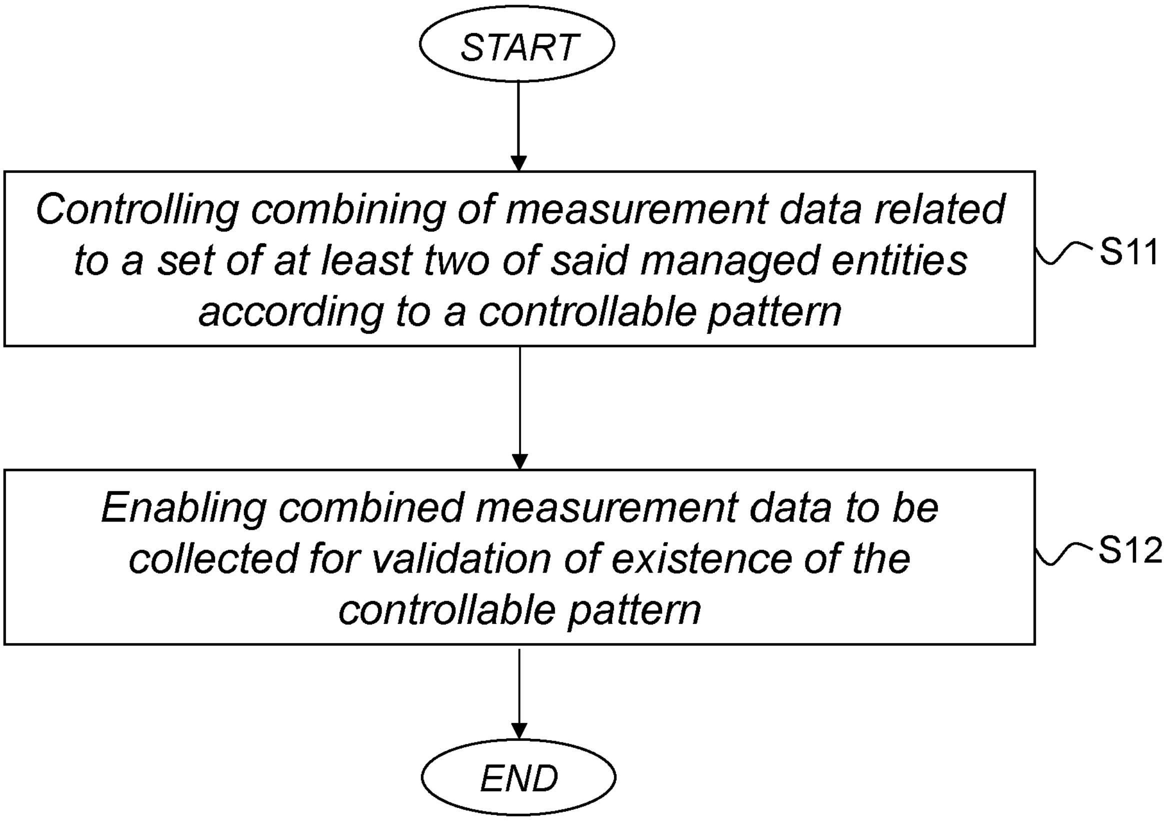
START
Controlling combining of measurement data related to a set of at least two of said managed entities according to a controllable pattern
S11
Enabling combined measurement data to be collected for validation of existence of the controllable pattern
S12
END

Fig. 7

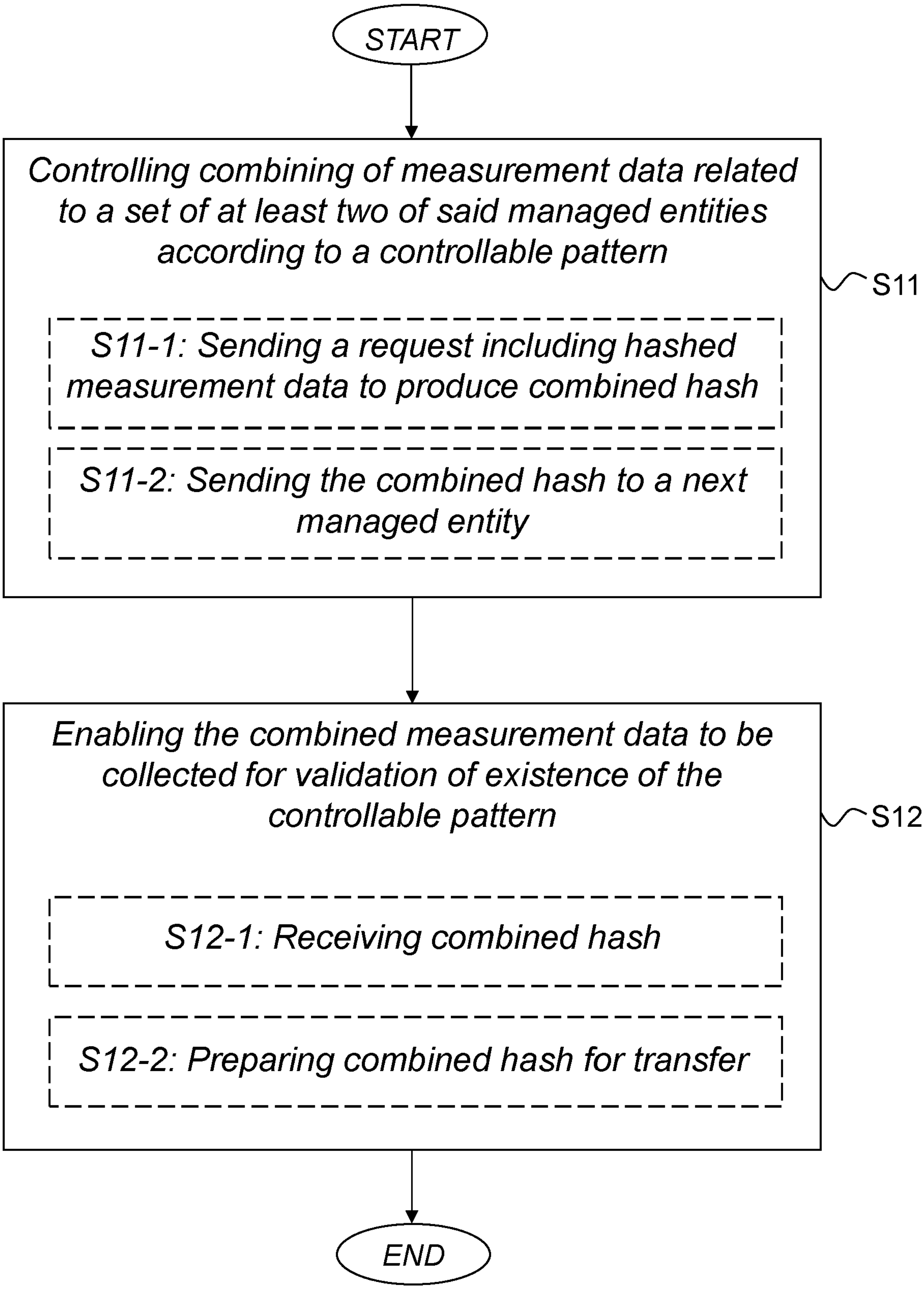
START
Controlling combining of measurement data related to a set of at least two of said managed entities according to a controllable pattern
S11
S11-1: Sending a request including hashed measurement data to produce combined hash
S11-2: Sending the combined hash to a next managed entity
Enabling the combined measurement data to be collected for validation of existence of the controllable pattern
S12
S12-1: Receiving combined hash
S12-2: Preparing combined hash for transfer
END

Fig. 8

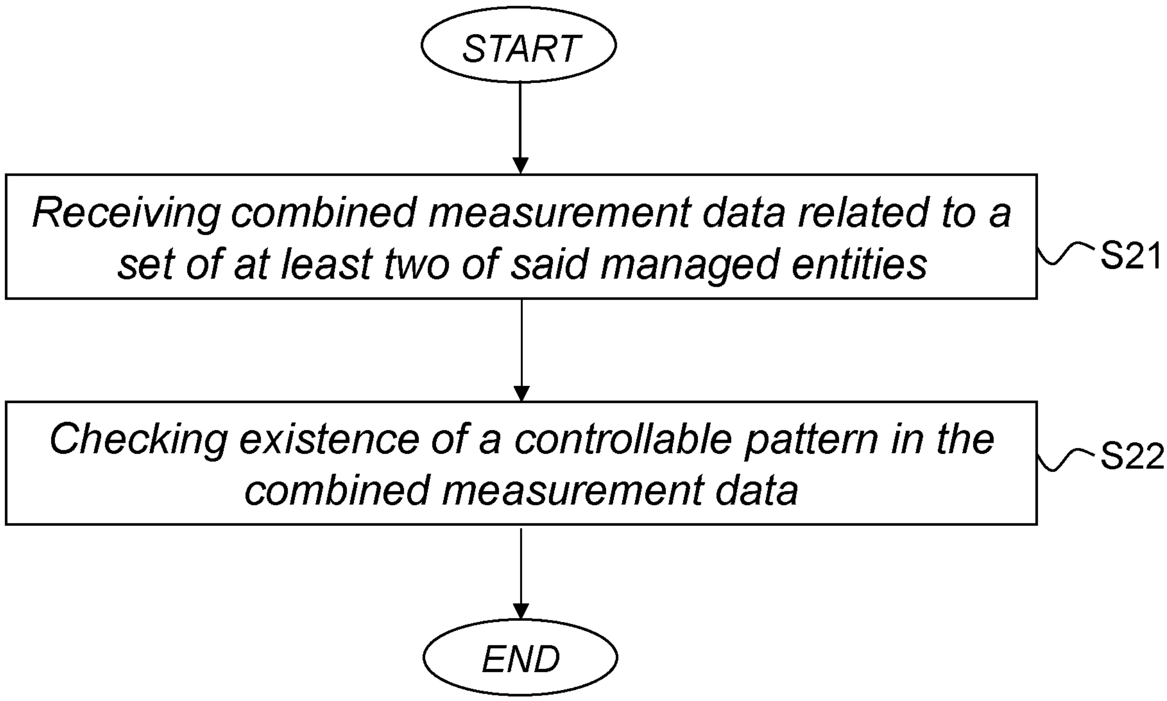
START
Receiving combined measurement data related to a set of at least two of said managed entities
S21
Checking existence of a controllable pattern in the combined measurement data
S22
END

Fig. 9

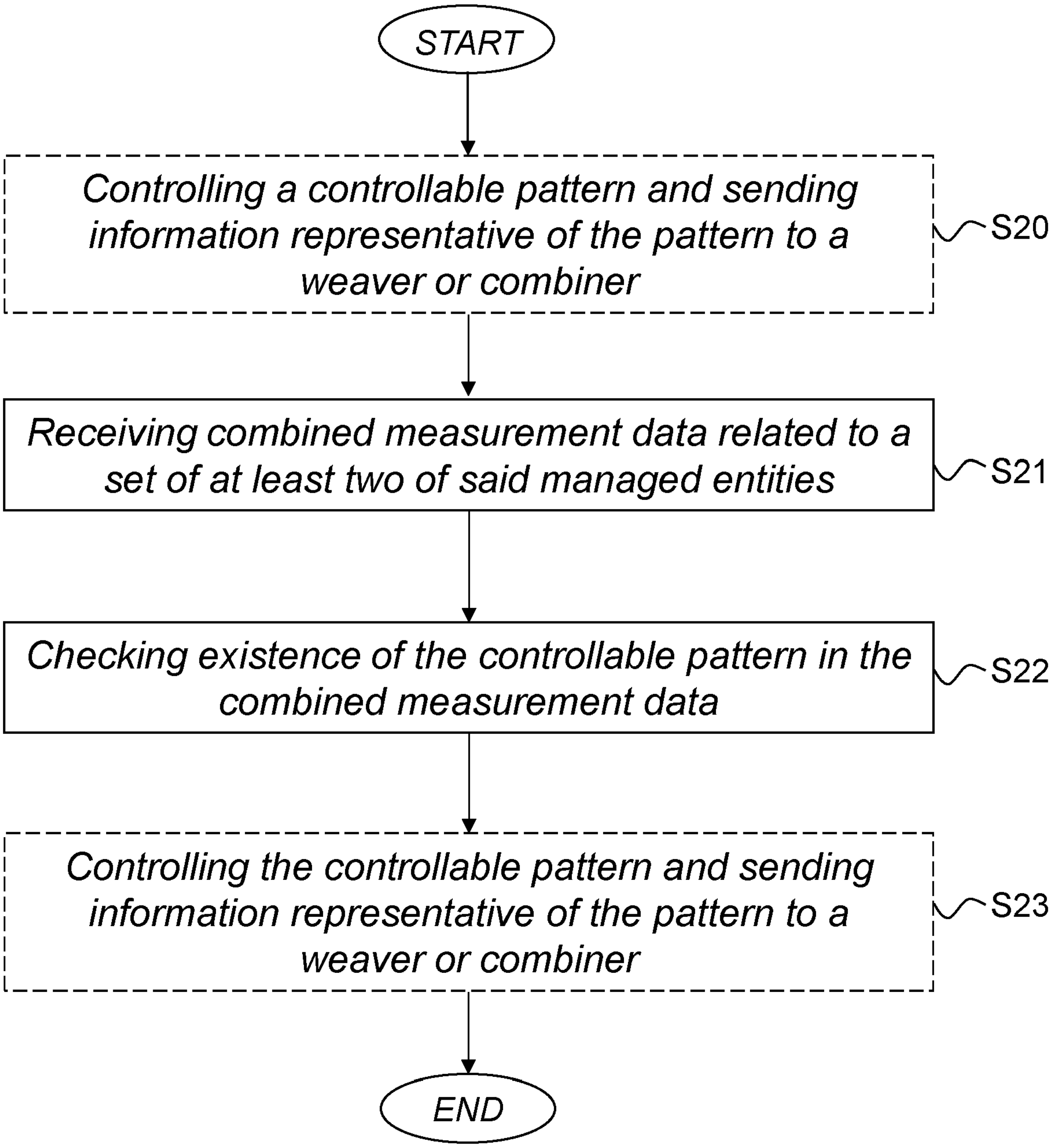
START
Controlling a controllable pattern and sending information representative of the pattern to a weaver or combiner
S20
Receiving combined measurement data related to a set of at least two of said managed entities
S21
Checking existence of the controllable pattern in the combined measurement data
S22
Controlling the controllable pattern and sending information representative of the pattern to a weaver or combiner
S23
END

Fig. 10

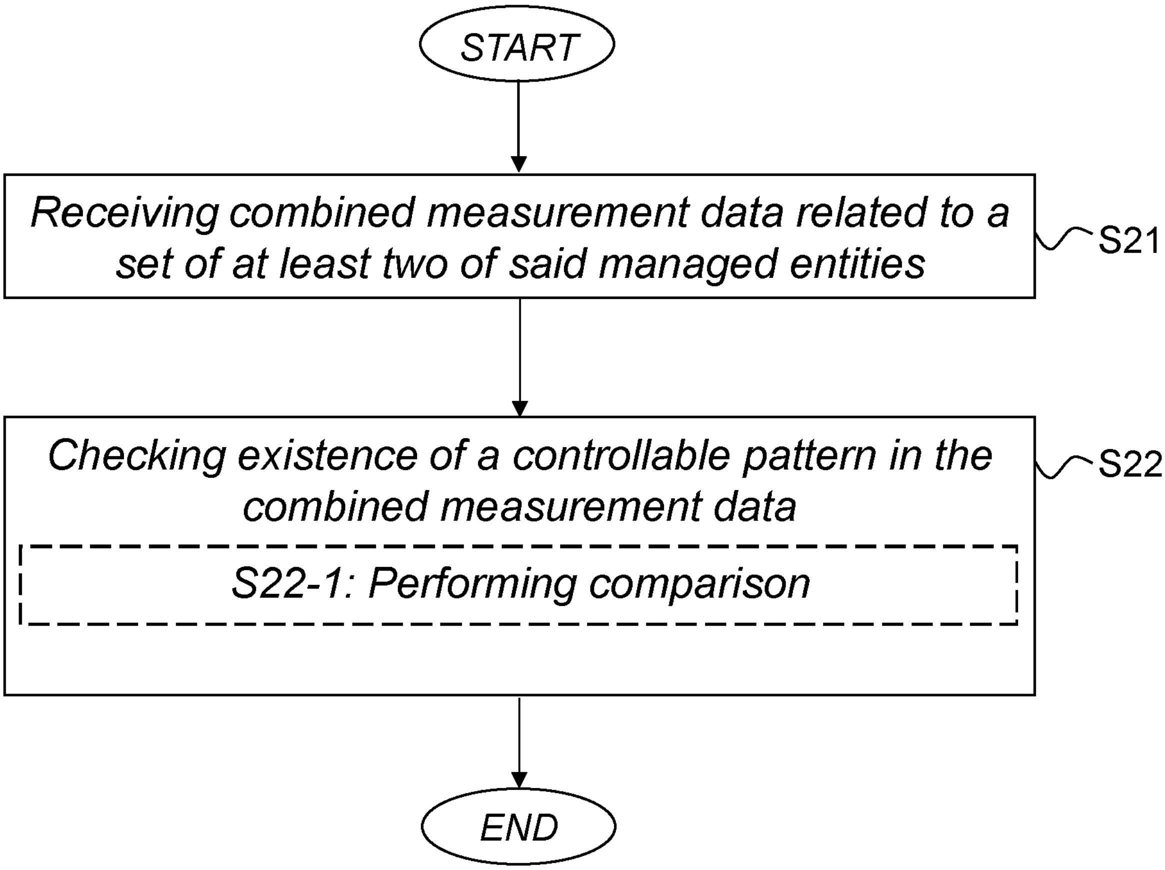
START
Receiving combined measurement data related to a set of at least two of said managed entities
S21
Checking existence of a controllable pattern in the combined measurement data
S22-1: Performing comparison
S22
END

Fig. 11

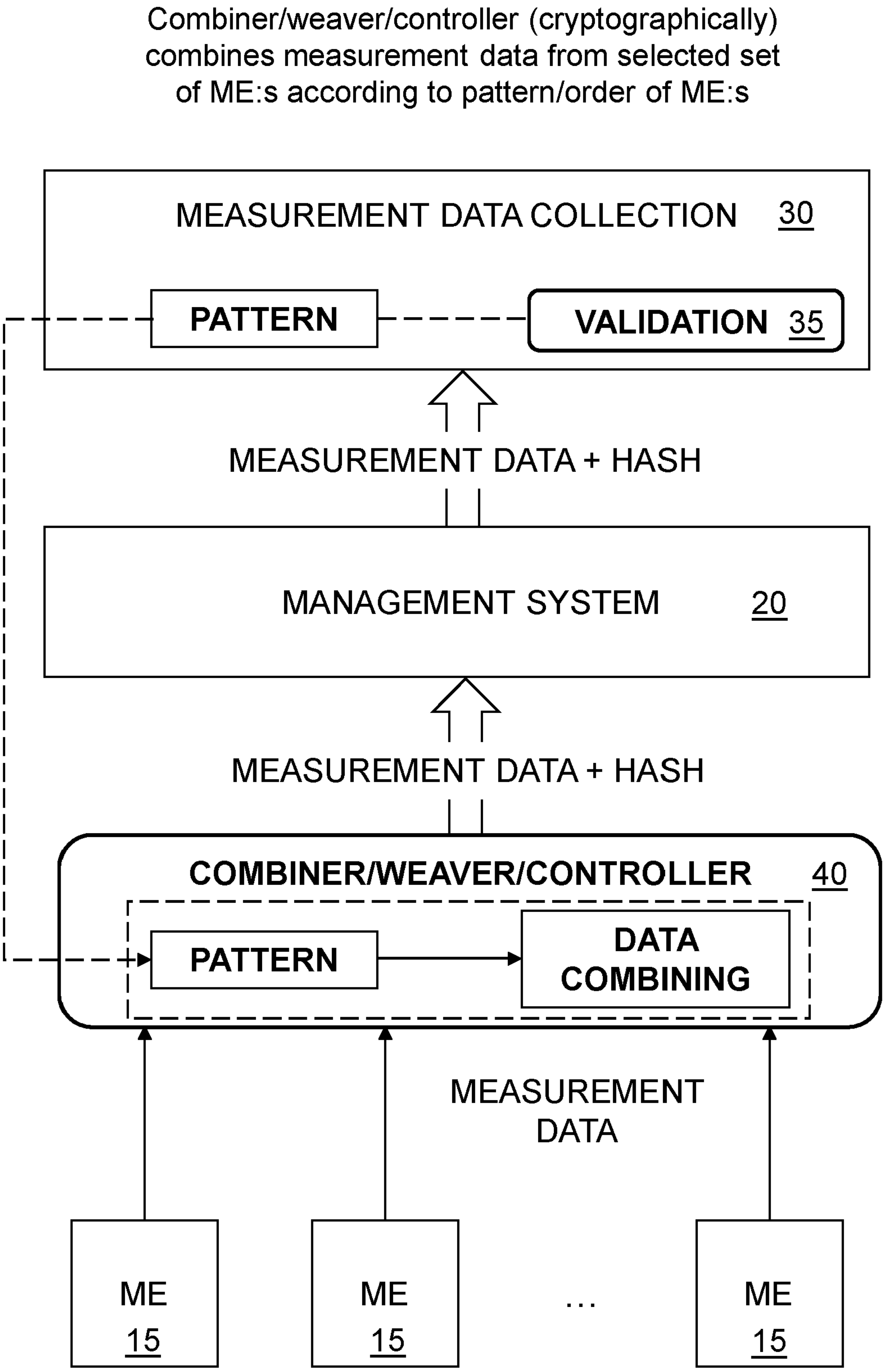
Combiner/weaver/controller (cryptographically)
combines measurement data from selected set
of ME:s according to pattern/order of ME:s
MEASUREMENT DATA COLLECTION 30
PATTERN
VALIDATION 35
MEASUREMENT DATA + HASH
MANAGEMENT SYSTEM 20
MEASUREMENT DATA + HASH
COMBINER/WEAVER/CONTROLLER 40
PATTERN
DATA COMBINING
MEASUREMENT DATA
ME 15
ME 15
...
ME 15

*Fig. 12*

Controller system controls pattern/order of selected set of ME:s and each of a number of MEs (cryptographically) combines own measurement data with measurement data from previous ME(s)

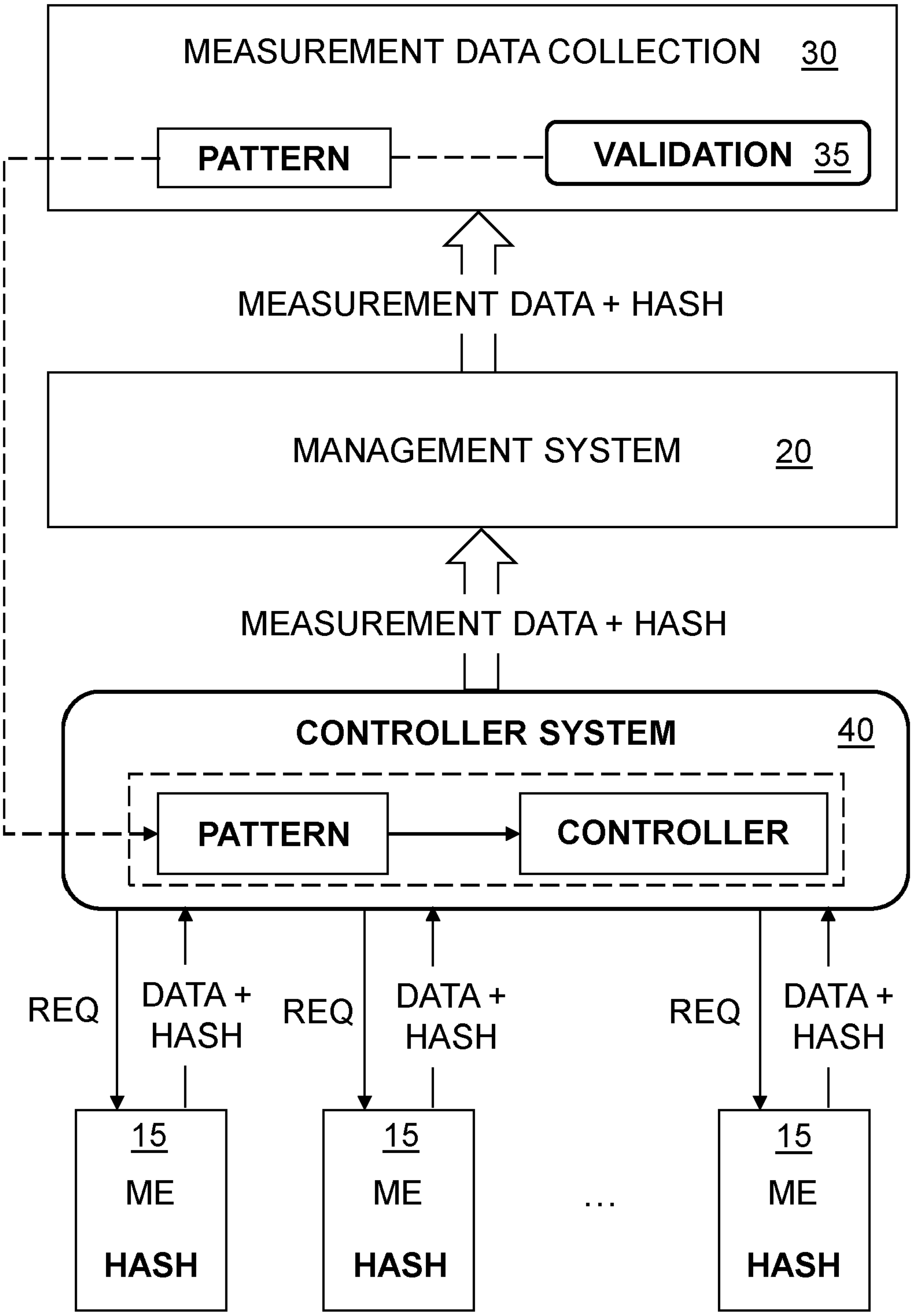


*Fig. 13*

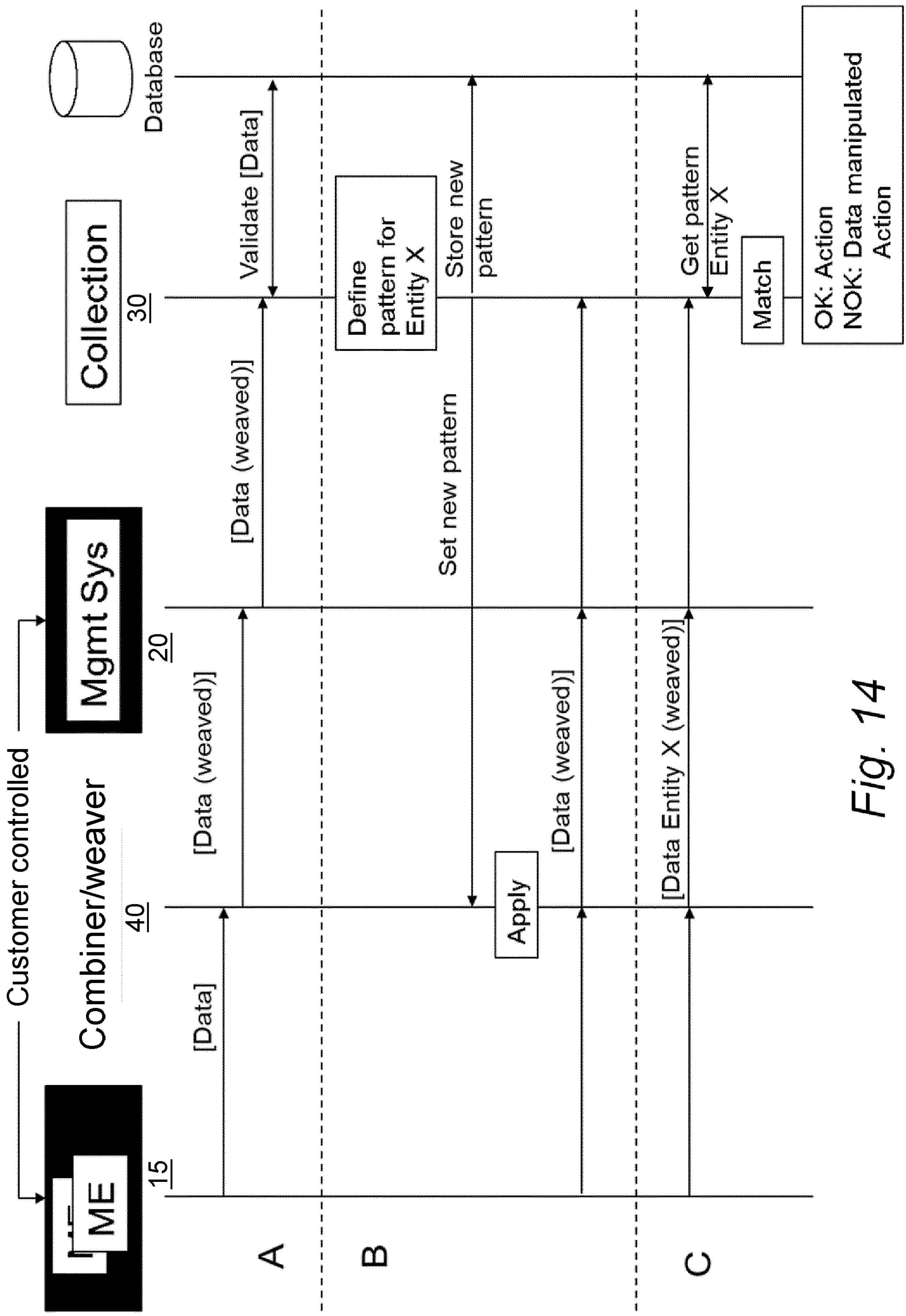

Customer controlled
ME
15
Combiner/weaver
40
Mgmt Sys
20
Collection
30
Database
A
B
C
[Data]
[Data (weaved)]
[Data (weaved)]
Validate [Data]
Define pattern for Entity X
Store new pattern
Set new pattern
Apply
[Data (weaved)]
[Data Entity X (weaved)]
Get pattern Entity X
Match
OK: Action
NOK: Data manipulated Action


Fig. 14

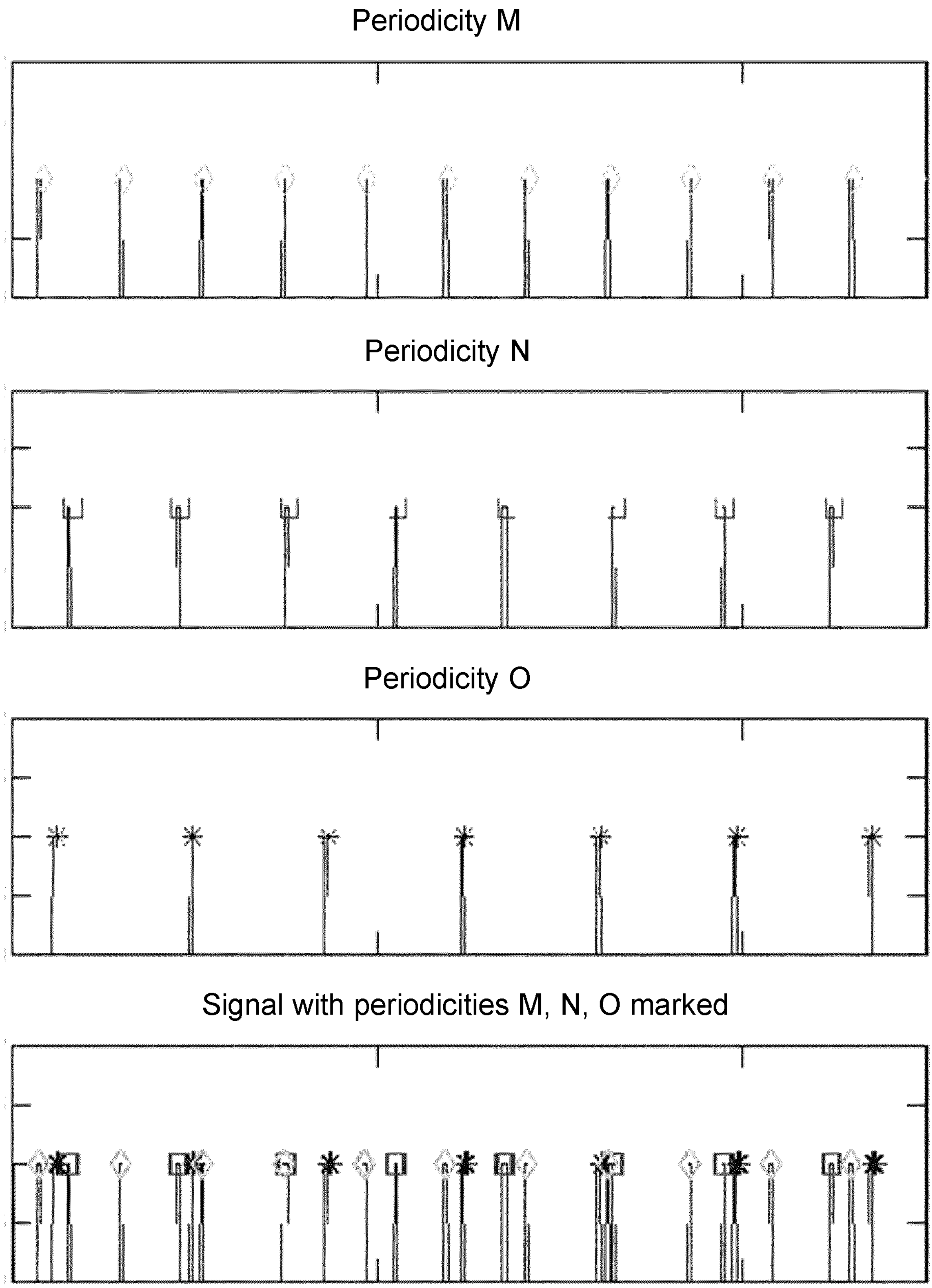
Periodicity M
Periodicity N
Periodicity O
Signal with periodicities M, N, O marked

*Fig. 15*

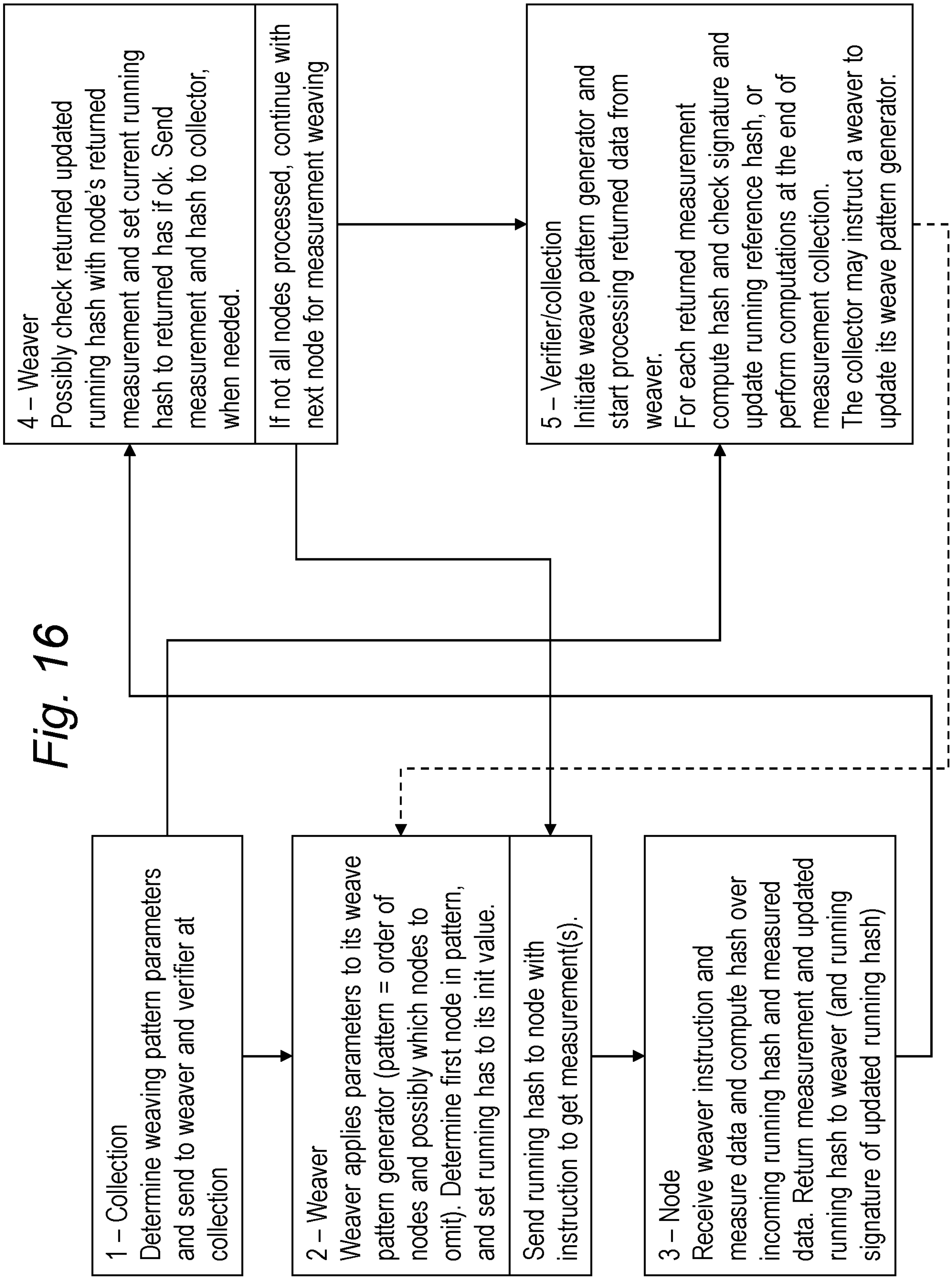
1 – Collection
Determine weaving pattern parameters and send to weaver and verifier at collection
2 – Weaver
Weaver applies parameters to its weave pattern generator (pattern = order of nodes and possibly which nodes to omit). Determine first node in pattern, and set running has to its init value.
Send running hash to node with instruction to get measurement(s).
3 – Node
Receive weaver instruction and measure data and compute hash over incoming running hash and measured data. Return measurement and updated running hash to weaver (and running signature of updated running hash)
4 – Weaver
Possibly check returned updated running hash with node's returned measurement and set current running hash to returned has if ok. Send measurement and hash to collector, when needed.
If not all nodes processed, continue with next node for measurement weaving
5 – Verifier/collection
Initiate weave pattern generator and start processing returned data from weaver.
For each returned measurement compute hash and check signature and update running reference hash, or perform computations at the end of measurement collection.
The collector may instruct a weaver to update its weave pattern generator.

Fig. 16

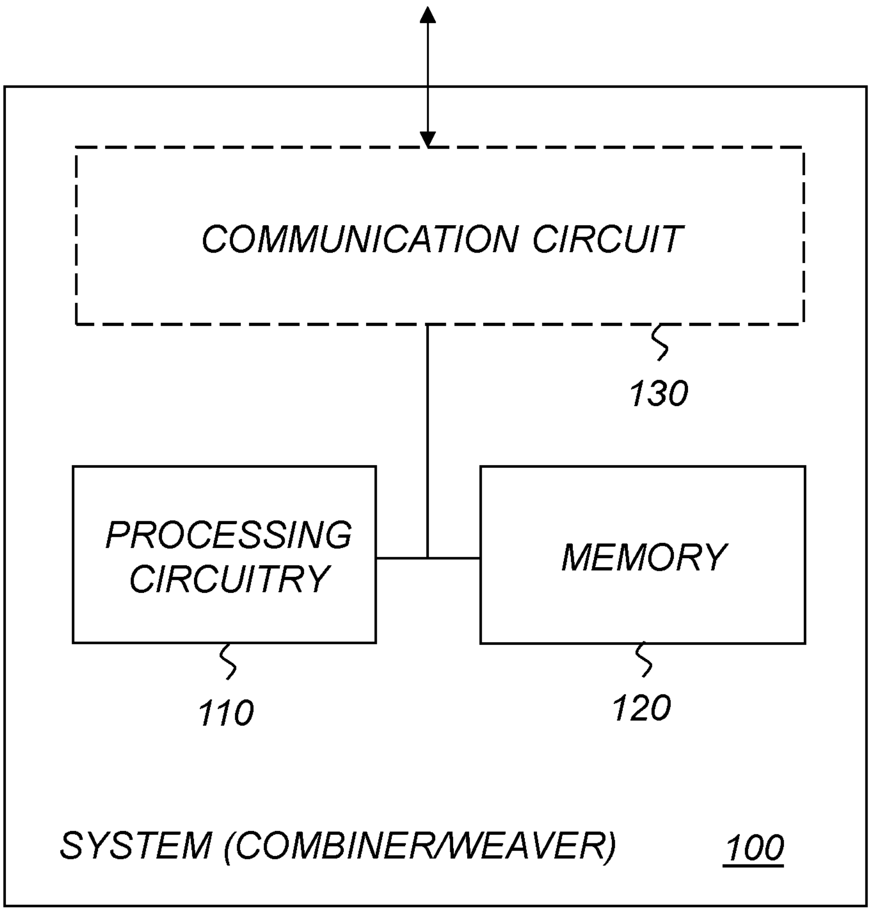
COMMUNICATION CIRCUIT
130
PROCESSING CIRCUITRY
MEMORY
110
120
SYSTEM (COMBINER/WEAVER)
100

Fig. 17

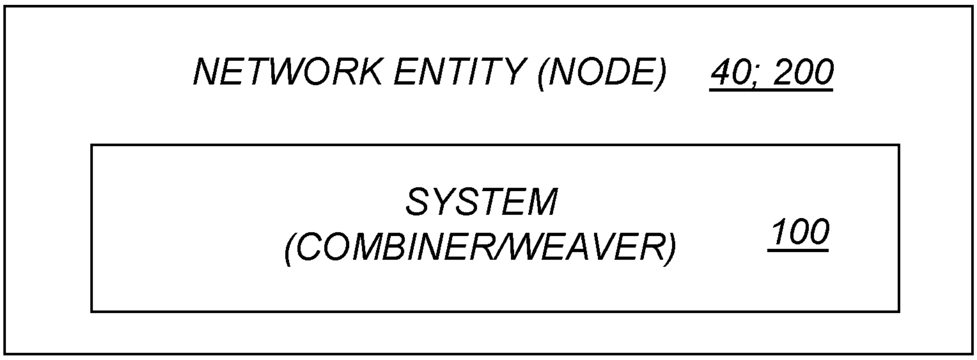


Fig. 18A

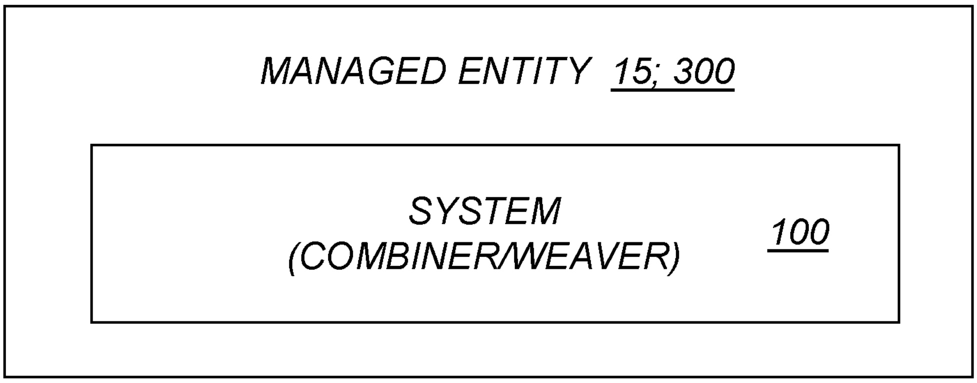


Fig. 18B

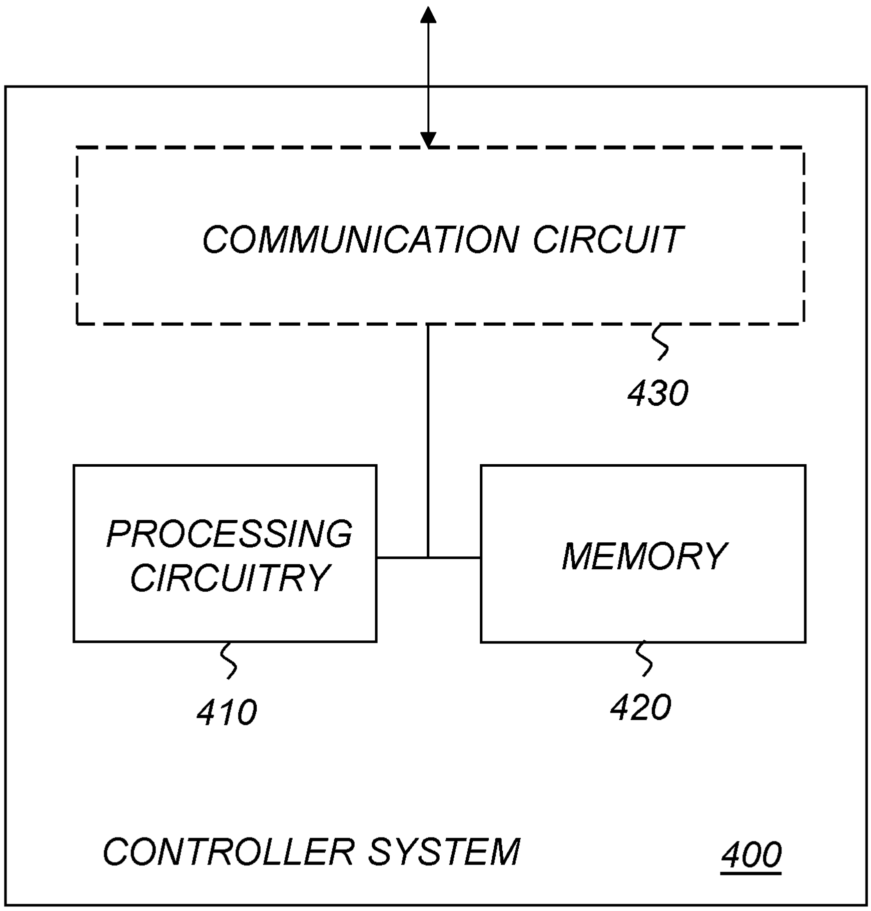


Fig. 19A

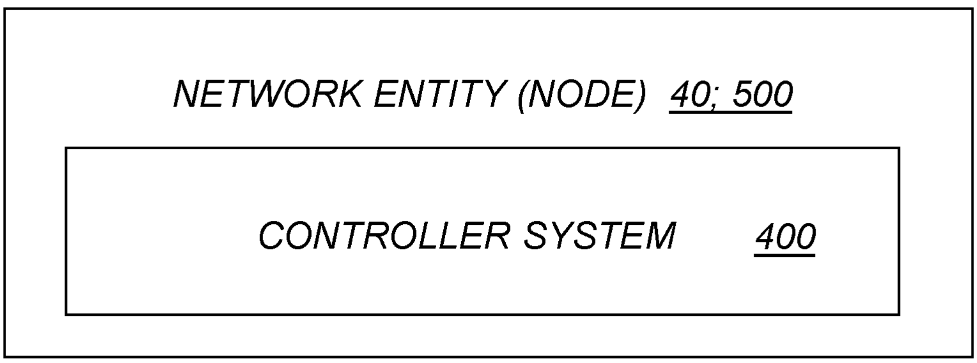


Fig. 19B

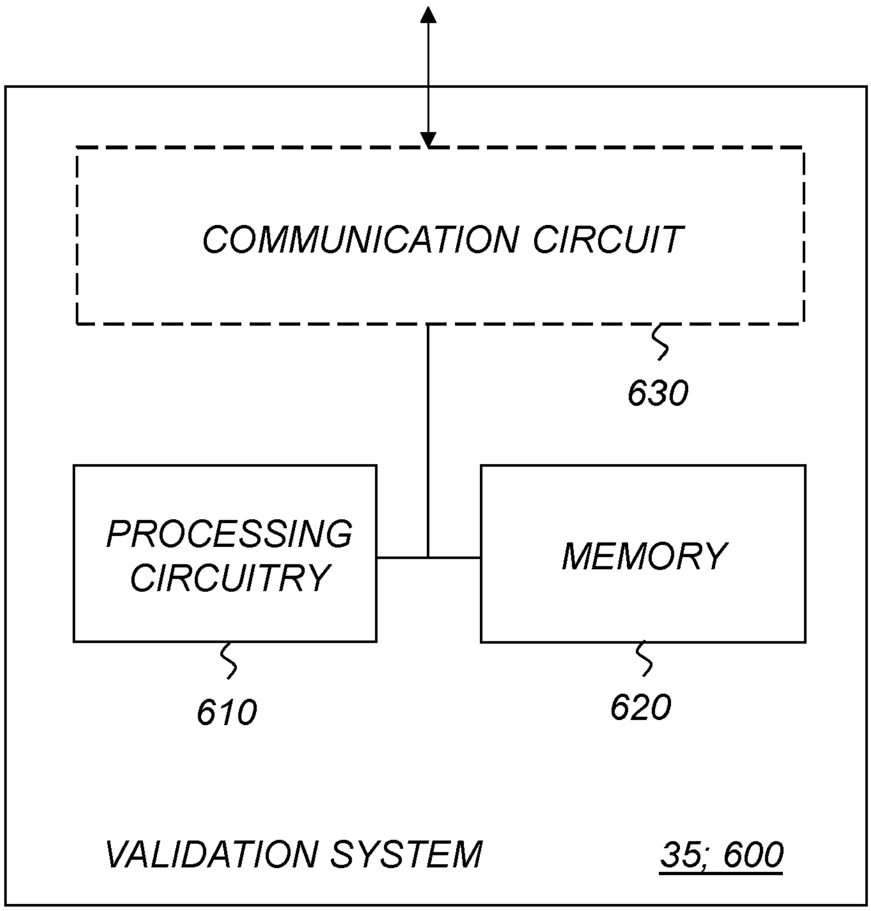


Fig. 20A

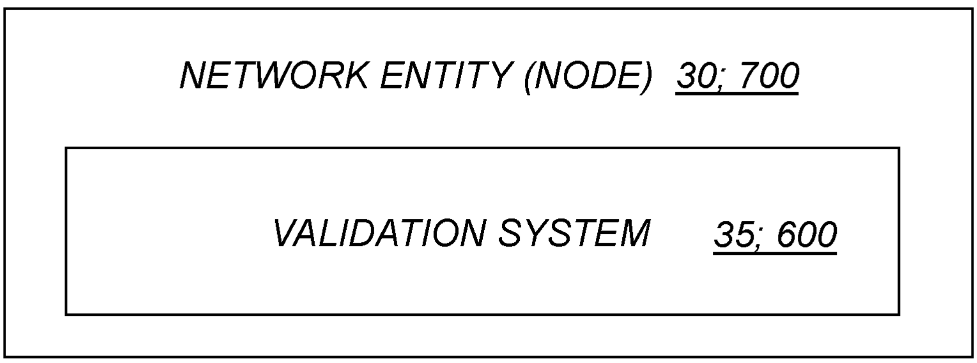


Fig. 20B

Fig. 21

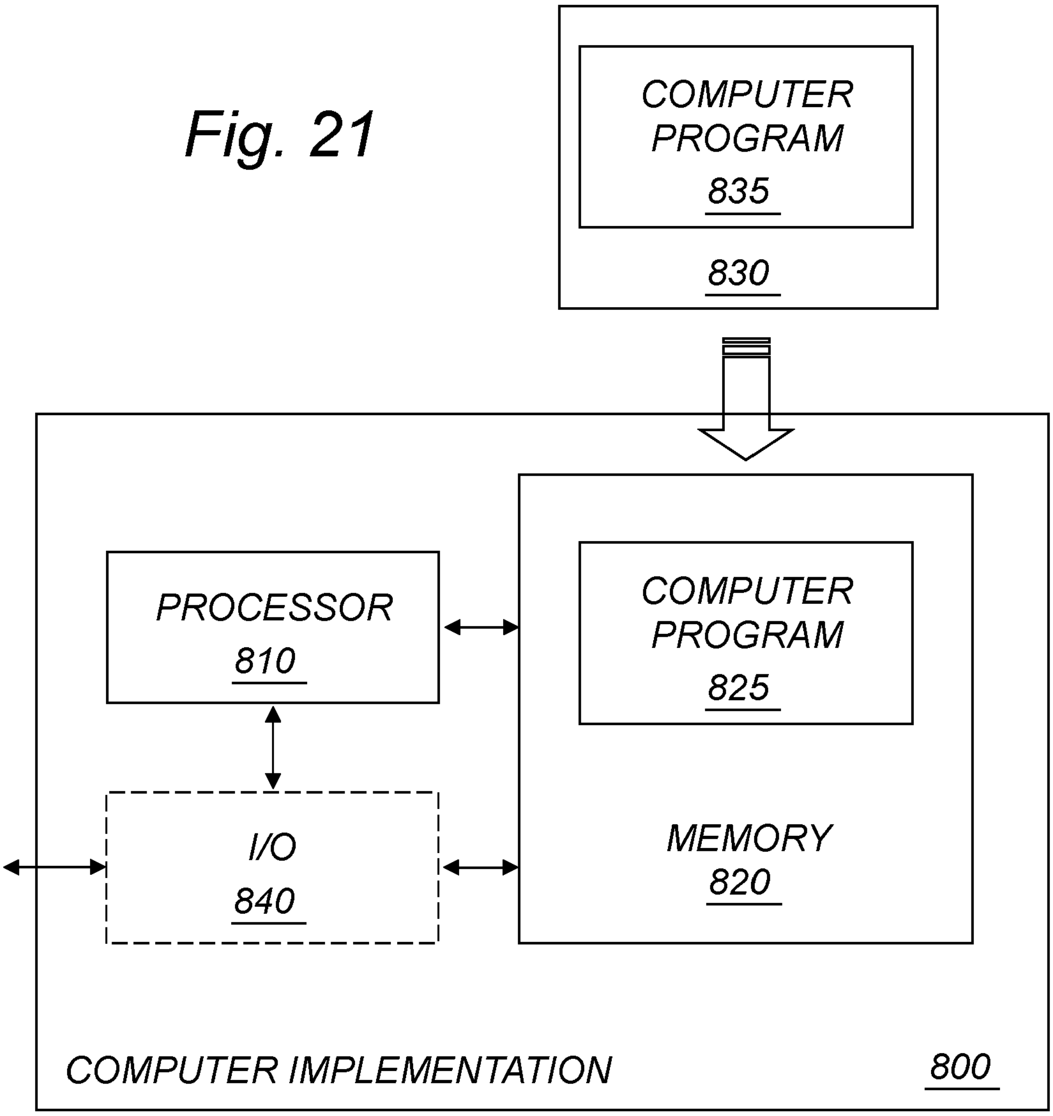
COMPUTER
PROGRAM
835
830
PROCESSOR
810
COMPUTER
PROGRAM
825
I/O
840
MEMORY
820
COMPUTER IMPLEMENTATION
800

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019215437 A1
- WO 2012075323 A1